# FASCICULE DE BREVET EUROPEEN

(11) **EP 3 245 147 B1**
(45) Date de publication et mention de la délivrance du brevet: **19.08.2020**
(21) Numéro de dépôt: 16700224.5
(22) Date de dépôt: 11.01.2016
(51) Int. Cl.: B65G 1/127, B65G 1/137

(54) **SYSTÈME ET PROCÉDÉ DE SÉQUENCEMENT POUR AU MOINS UN POSTE DE PRÉPARATION**
SYSTEM UND VERFAHREN ZUR SEQUENZIERUNG FÜR MINDESTENS EINE ZUBEREITUNGSSTATION
SYSTEM AND METHOD OF SEQUENCING FOR AT LEAST ONE PREPARATION STATION

(30) Priorité: 13.01.2015 FR 1550260
(43) Date de publication de la demande: 22.11.2017
(73) Titulaire: Savoye, 21000 Dijon (FR)
(72) Inventeur: COLLIN, Jean-Michel, 21190 Merceuil (FR); PIETROWICZ, Stéphane, 21220 Fixin (FR)
(74) Mandataire: Vidon Brevets & Stratégie
(86) Numéro de dépôt international: PCT/EP2016/050401
(87) Numéro de publication internationale: WO 2016/113230

(56) Documents cités:
- EP-A2- 1 857 381
- WO-A1-2006/137096
- DE-A1- 10 225 332
- DE-C1- 10 123 327
- JP-A- S60 167 805
- US-A- 5 171 120

## Description

### 1. DOMAINE DE L'INVENTION

Le domaine de l'invention est celui de la logistique.

La présente invention concerne plus précisément un système de séquencement pour au moins un poste de préparation. Un tel système est configuré pour séquencer des charges provenant d'au moins une unité externe (par exemple un magasin de stockage), via au moins un convoyeur aller d'entrée, et fournir audit au moins un poste de préparation, via au moins un convoyeur aller de sortie, au moins une séquence comprenant des charges dans un ordre voulu.

La présente invention peut s'appliquer à n'importe quel type de poste de préparation, et notamment mais non exclusivement :
- aux postes de préparation de commandes (aussi appelés « postes de picking »), par prélèvements de produits dans des contenants de stockage (aussi appelés « charges sources ») : un opérateur (ou un robot) reçoit une liste de prélèvements (sur papier, sur écran d'un terminal, sous forme vocale, sous forme de mission informatique (dans le cas du robot), etc.) lui indiquant, pour chaque colis à expédier (aussi appelé « contenant d'expédition » ou « charge cible »), la quantité de chaque type de produits qu'il doit collecter dans des contenants de stockage et regrouper dans le colis à expédier ; et
- aux postes de palettisation de contenants de stockage (aussi appelés « charges sources ») contenant eux-mêmes des produits : un opérateur (ou un robot) reçoit une liste de prélèvements (sur papier, sur écran d'un terminal, sous forme vocale, sous forme de mission informatique (dans le cas du robot), etc.) lui indiquant, pour chaque palette à expédier (aussi appelée « contenant d'expédition » ou « charge cible »), la quantité de chaque type de contenants de stockage (par exemple des cartons) qu'il doit collecter et décharger sur la palette à expédier.

### 2. ARRIÈRE-PLAN TECHNOLOGIQUE

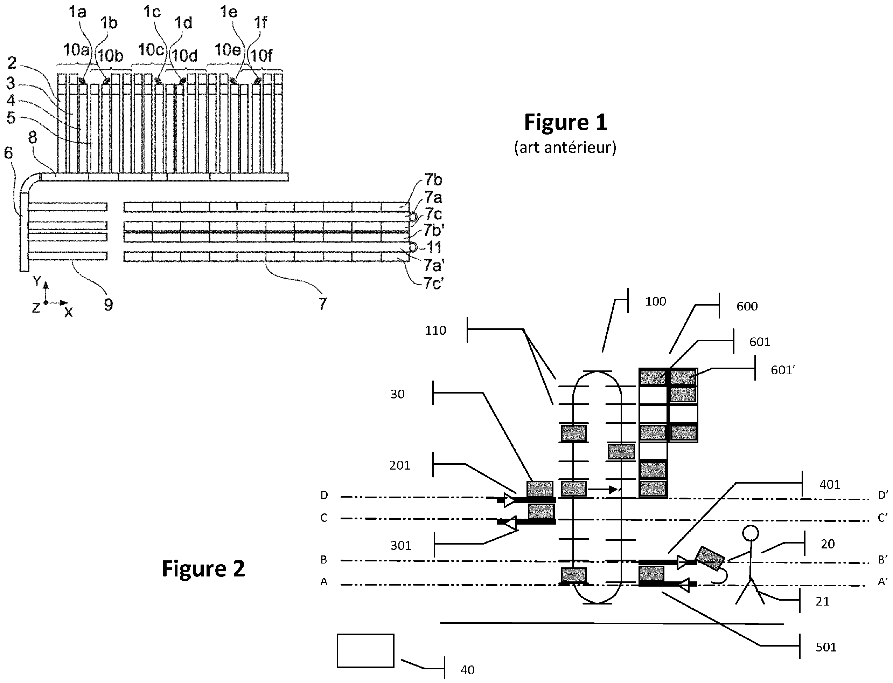

On présente maintenant, en relation avec la **figure 1**, une vue de dessus d'un exemple de configuration connue pour un système de stockage automatisé de préparation de colis comprenant :
- un magasin de stockage 7 comprenant plusieurs (deux dans cet exemple) ensembles formés chacun d'une allée 7a, 7a' desservant de part et d'autre une étagère de stockage 7b, 7c, 7b', 7c' à plusieurs niveaux de rangements superposés. ;
- un ensemble de convoyeurs amenant les charges sources depuis le magasin jusqu'aux postes de préparation, et réciproquement. Dans l'exemple de la figure 1, on distingue trois sous-ensembles de convoyeurs, référencés 6, 8 et 9 respectivement ;
- plusieurs postes de préparation de commandes 10a à 10f, occupés chacun par un opérateur la à 1f et s'étendant perpendiculairement aux convoyeurs du troisième sous-ensemble référencé 8 ; et
- un système de pilotage (aussi appelé « unité de pilotage »), qui est un système informatique de gestion central ayant en charge le pilotage de l'ensemble du système de stockage automatisé (magasin de stockage, ensemble de convoyeurs et postes de préparation).

Le système de pilotage gère également la liste de commandes associée à chaque contenant d'expédition (charge cible) et donc l'ordre des lignes de commande formant cette liste, en fonction de l'emplacement des contenants de stockage (charges sources) dans le magasin de stockage, de la disponibilité des chariots et des élévateurs du magasin de stockage, ainsi que des besoins en produits des différents contenants d'expédition à préparer qui se succèdent au poste de préparation. Ceci a pour but d'optimiser tous les déplacements et les temps de préparation des contenants d'expédition et d'assurer la synchronisation entre l'arrivée, au poste de préparation, d'un contenant d'expédition et des contenants de stockage (contenant les produits indiqués dans la liste de commande associée à ce contenant de stockage).

Dans l'exemple de la figure 1, chaque poste de préparation comprend deux circuits de convoyeurs : un premier circuit de convoyeurs pour les contenants de stockage, formé de deux colonnes horizontales de convoyeurs : l'une (colonne aller 2) pour le déplacement des contenants de stockage depuis le troisième sous-ensemble de convoyeurs 8 jusqu'à l'opérateur la, et l'autre (colonne retour 3) pour le déplacement inverse ; et un deuxième circuit de convoyeurs pour les contenants d'expédition, formé de deux colonnes horizontales de convoyeurs : l'une (colonne aller 4) pour le déplacement des contenants d'expédition depuis le troisième sous-ensemble de convoyeurs 8 jusqu'à l'opérateur la, et l'autre (colonne retour 5) pour le déplacement inverse. Dans chacun des premier et deuxième circuits, la colonne aller 2 et 4 (composée de convoyeurs classiques horizontaux) réalise la fonction d'accumulation d'une quantité déterminée de contenants en amont de l'opérateur (ou l'automate).

Un contenant de stockage effectue le parcours suivant : il est prélevé par un chariot dans le magasin de stockage 7, puis convoyé successivement par les convoyeurs des sous-ensembles 9, 6 et 8, puis par les convoyeurs de la colonne aller 2, pour être présenté à l'opérateur. Dans l'autre sens (après présentation à l'opérateur), le contenant de stockage effectue le parcours inverse : il est convoyé par les convoyeurs de la colonne retour 3, puis successivement par les convoyeurs des sous-ensembles 9, 6 et 8, et enfin replacé dans le magasin de stockage 7 par un chariot.

Comme mentionné plus haut, les contenants de stockage (charges sources) doivent être présentés à l'opérateur dans un ordre voulu formant une séquence déterminée. Il en est de même pour les contenants d'expédition (charges cibles). En outre, le flux de contenants de stockage doit être synchronisé avec le flux de contenants d'expédition.

Afin de relâcher les contraintes sur le magasin de stockage, on admet que les contenants (contenants de stockage ou contenants d'expédition) ne sortent pas du magasin de stockage dans l'ordre voulu (c'est-à-dire l'ordre dans lequel ils doivent être présentés à l'opérateur). Il est donc nécessaire d'effectuer une opération de séquencement des contenants entre le magasin de stockage et le poste de préparation où se trouve l'opérateur.

Dans l'exemple de la figure 1, cette opération de séquencement est effectuée par le second sous-ensemble de convoyeurs 6 qui assure lui-même le rôle de tampon : les contenants de stockage y circulent en boucle et lorsque le contenant de stockage attendu sur les convoyeurs de la colonne aller 2 se présente devant cette dernière (afin de compléter la séquence de contenants de stockage attendus au poste de préparation), celui-ci est transféré sur les convoyeurs de la colonne aller 2, les autres contenants de stockage continuant à circuler sur le second sous-ensemble de convoyeurs 6. Ce procédé est effectué pour chacun des contenants de stockage attendus dans la séquence (c'est-à-dire dans l'ordre d'arrivée souhaité au poste de préparation).

De manière classique, cet ordre d'arrivée (séquence) est prédéterminé (c'est-à-dire déterminé, pour chaque contenant, avant que ce contenant n'atteigne le poste de préparation) par le système de pilotage et, si nécessaire, recalculé au cours de l'acheminement des contenants de la sortie du magasin de stockage vers le poste de préparation où se trouve l'opérateur (par exemple pour tenir compte d'une panne d'un élément du système).

Dans l'exemple illustré sur la figure 1, la colonne retour pour les contenants d'expédition 5 est commune aux postes de préparation référencés 10a et 10b (ces deux postes adjacents sont configurés de manière symétrique l'un par rapport à l'autre, la colonne commune formant un axe de symétrie). Il en est de même pour les postes de préparation adjacents référencés 10c et 10d, ainsi que pour ceux référencés 10e et 10f. Ceci vise à réduire l'emprise au sol des postes de préparation.

Malheureusement, malgré cette astuce, la solution actuelle à base de convoyeurs classiques horizontaux (comme décrit ci-dessus en relation avec la figure 1) présente plusieurs inconvénients.

Tout d'abord, elle présente une trop forte consommation de m² à faible hauteur de plan de roulement (750 mm typiquement). A titre d'exemple de cette emprise au sol trop élevée, la surface nécessaire pour six postes de préparation de commandes (comme dans l'exemple de la figure 1) est de l'ordre de 100 m².

Un autre inconvénient est que la densité au sol des convoyeurs classiques horizontaux compris dans les postes de préparation est telle qu'elle rend difficile l'accès maintenance à ces convoyeurs (nappe de convoyeurs trop dense).

Un autre inconvénient est que, sauf à augmenter encore l'emprise au sol du poste de préparation (en augmentant la longueur de la colonne aller de chacun des premier et deuxième circuits), il n'est pas possible d'augmenter le nombre de contenants pouvant être accumulés en amont de l'opérateur (ou l'automate).

Encore un autre inconvénient est que, dans certaines configurations, l'emprise au sol des postes de préparation empêche ou rend difficile l'accès maintenance pour les chariots (aussi appelés navettes) utilisés dans le magasin de stockage. On est alors parfois obligé, pour la maintenance de ces chariots, d'accéder au magasin de stockage par l'arrière, avec un système à palan (référencé 11 sur la figure 1) qui est peu ergonomique.

Encore un autre inconvénient est qu'il n'est pas possible de traiter de manière optimale le cas où l'on souhaite présenter plusieurs fois successivement un même contenant à l'opérateur. En effet, on utilise actuellement le sous-ensemble de convoyeurs référencé 6 pour effectuer une opération de réintroduction du contenant de stockage donné dans la colonne aller 2 du premier circuit du poste de préparation (10a par exemple). Ceci n'est pas optimal car l'intervalle de temps entre deux présentations successives du même contenant à l'opérateur ne peut pas être faible et correspond à la durée de parcours par ce contenant de l'ensemble du circuit suivant : convoyeurs de la colonne retour 3, puis ceux du sous-ensemble de convoyeurs référencé 6, et enfin ceux de la colonne aller 2. En pratique, si cet intervalle de temps est trop élevé, on fait sortir du magasin de stockage deux contenants de stockage qui contiennent le (même) type de produits souhaités. On augmente alors le nombre de mouvements effectués par le magasin de stockage, ce qui n'est pas une solution satisfaisante (car cela induit généralement une augmentation du nombre d'allées du magasin de stockage, afin de ne pas dépasser une capacité maximale d'entrées/sorties pouvant être effectuées par le ou les élévateurs disposés à chaque extrémité d'une allée).

Afin de pallier les inconvénients précités de la technique classique, une solution a été proposée dans le brevet EP2487123A1 (Savoye). Elle consiste à utiliser au moins une cheminée en combinaison avec au moins un élévateur alternatif. La cheminée comprend des emplacements mobiles superposés pouvant chacun recevoir et déplacer vers le bas au moins une charge (contenant). La cheminée forme un moyen d'accumulation verticale et de distribution séquencée de charges préalablement placées dans les emplacements. L'élévateur alternatif est apte à se déplacer verticalement le long de la cheminée jusqu'à chacun de ses emplacements. Pour chaque charge donnée qui se présente, le système de pilotage lit son identifiant, puis sélectionne un des emplacements de la cheminée (en fonction de l'identifiant lu et d'une séquence prédéterminée, définissant l'ordre dans lequel les charges doivent sortir de la cheminée pour être présentées au poste de préparation), et enfin pilote l'élévateur afin de faire entrer la charge donnée dans l'emplacement sélectionné.

La solution connue de EP2487123A1, en étant basée sur une accumulation verticale de charges, présente plusieurs avantages et permet notamment de :
- réduire l'emprise au sol du poste de préparation de commandes ;
- faciliter l'accès maintenance aux éléments compris dans le poste de préparation (pas de nappe de convoyeurs trop dense) ;
- augmenter le nombre de charges pouvant être accumulées, sans impact négatif sur l'emprise au sol du poste de préparation ; et
- faciliter l'accès maintenance pour les chariots utilisés dans le magasin de stockage.

En outre, l'utilisation combinée d'une cheminée et d'un élévateur alternatif permet d'effectuer un séquencement (c'est-à-dire un ordonnancement, au sens de mettre les charges dans un ordre voulu appelé séquence). On rappelle que les charges ne sortent pas du magasin de stockage dans l'ordre voulu et doivent être séquencées (ordonnancées) avant d'être présentées à l'opérateur (ou robot). La capacité de séquencement (ordonnancement) est liée à la quantité de charges pouvant être stockées temporairement dans la cheminée.

La solution connue de EP2487123A1 présente cependant plusieurs inconvénients, notamment :
- elle est limitée en performance du fait qu'elle nécessite l'utilisation d'un ou plusieurs élévateurs alternatifs ;
- elle n'est pas multi-format au niveau des cheminées ; et
- elle nécessite deux équipements distincts (élévateur et cheminée), utilisés en combinaison, pour créer des séquences, ce qui augmente son coût.

On connaît également le document EP1857381A2 qui décrit un système 1 de stockage et de préparation de commandes, comprenant notamment :
- deux postes de préparation 2, 2', approvisionnés en articles 9, 9' respectivement ;
- deux zones de stockage 3, 3' (d'où sont extraits les articles 9, 9' respectivement) ; et
- deux paternosters (transporteurs sans fin) 7, 7' comprenant chacun une ligne 10a, 10b' circulant vers le haut et une ligne 10a', 10b circulant vers le bas.

Le fonctionnement du système du document EP1857381A2 est le suivant :
- pour le poste de préparation 2, le sens de transport d'un article 9 (signalé par des flèches T) est réalisé sous la forme d'une première boucle fermée comprenant :
   ∘ un circuit aller : l'article 9 est extrait de la zone de stockage 3, puis est véhiculé successivement par la ligne 10a (circulant vers le haut) du paternoster 7, et par le transporteur 8, jusqu'au poste de préparation 2 ; et
   ∘ un circuit retour : l'article 9 est véhiculé par le transporteur 8, puis par la ligne 10a' (circulant vers le bas) du paternoster 7', et enfin est réintroduit dans la zone de stockage 3 ;
- pour le poste de préparation 2', le sens de transport d'un article 9' (signalé par des flèches T') est réalisé sous la forme d'une deuxième boucle fermée comprenant :
   ∘ un circuit aller : l'article 9' est extrait de la zone de stockage 3', puis est véhiculé successivement par la ligne 10b' (circulant vers le haut) du paternoster 7', et par le transporteur 8', jusqu'au poste de préparation 2' ;
   ∘ un circuit retour : l'article 9' est véhiculé par le transporteur 8', puis par la ligne 10b (circulant vers le bas) du paternoster 7, puis est réintroduit dans la zone de stockage 3'.

Il y a donc deux boucles distinctes et chacune de ces deux boucles utilise une ligne du paternoster 7 et une ligne du paternoster 7'. Par ailleurs, aucun article 9, 9' ne reste sur l'un des paternosters 7, 7' pendant un cycle complet de celui-ci.

US5171120 décrit un système d'entreposage intégré pour au moins un poste de préparation, configuré pour alimenter des charges provenant d'au moins une unité externe -c'est à dire une zone de stockage amont-, via au moins un convoyeur aller d'entrée, et pour fournir audit au moins un poste de préparation, via au moins un convoyeur aller de sortie, au moins une séquence comprenant des charges dans un ordre voulu, et qui comprend en outre une unité de pilotage ainsi qu'un élévateur piloté à nacelles circulant en boucle fermée, dit paternoster, chaque nacelle permettant de transporter au moins une charge.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique (système et procédé) permettant de pallier les inconvénients de la technique classique précitée (cf. figure 1), tout en évitant les inconvénients de la technique connue de EP2487123A1.

### 4. EXPOSÉ DE L'INVENTION

Dans un mode de réalisation particulier de l'invention, il est proposé un système de séquencement pour au moins un poste de préparation, configuré pour séquencer des charges provenant d'au moins une unité externe, via au moins un convoyeur aller d'entrée, et fournir audit au moins un poste de préparation, via au moins un convoyeur aller de sortie, au moins une séquence comprenant des charges dans un ordre voulu. Le système comprend :
- un élévateur piloté à nacelles circulant en boucle fermée, dit paternoster, chaque nacelle permettant de transporter au moins une charge et étant équipée d'un dispositif de transfert de charge sur ou en dehors de ladite nacelle ;
- au moins un emplacement tampon, configuré pour recevoir temporairement au moins une charge provenant du paternoster ; et
- une unité de pilotage, configurée pour organiser les mouvements des charges dans le système et traiter chaque charge se présentant en entrée du paternoster, via ledit au moins un convoyeur aller d'entrée, selon un des modes suivants, sélectionné en fonction de la place souhaitée pour ladite charge dans ladite au moins une séquence :
   (a) après introduction dans le paternoster, la charge subit un transfert raccourci entre deux nacelles positionnées face à face, par mise en œuvre des dispositifs de transfert de charge des deux nacelles, puis est présentée audit au moins un convoyeur aller de sortie ;
   (b) après introduction dans le paternoster, la charge subit au moins un transfert tampon vers un emplacement tampon donné, puis est ultérieurement replacée dans le paternoster et enfin présentée audit moins un convoyeur aller de sortie ;
   (c) après introduction dans le paternoster, la charge y est transportée sans transfert raccourci ni transfert tampon, puis présentée audit au moins un convoyeur aller de sortie.

Le principe général consiste à effectuer un séquencement de charges (c'est-à-dire un ordonnancement, au sens de mettre les charges dans un ordre voulu appelé séquence) en utilisant de manière combinée, et selon sur une approche tout à fait nouvelle et inventive (sans élévateur alternatif), un paternoster (avec au moins une nacelle) et au moins un emplacement tampon, sous le contrôle d'une unité de pilotage mettant en œuvre trois modes de traitement possibles pour chaque charge qui se présente en entrée du paternoster.

Le mode (a) peut être vu comme un mécanisme permettant d'accélérer (au sens de faire remonter dans la séquence courante, qui est en cours de modification pour aboutir à la séquence souhaitée) une charge donnée qui se présente, en entrée du paternoster, en retard par rapport à une ou plusieurs autres charges qui se sont déjà présentées en entrée du paternoster alors qu'elles doivent se situer derrière la charge donnée dans la séquence souhaitée.

Le mode (b) peut être vu comme un mécanisme permettant de retarder (au sens de faire reculer dans la séquence courante, qui est en cours de modification pour aboutir à la séquence souhaitée) une charge donnée qui se présente, en entrée du paternoster, en avance par rapport à une ou plusieurs autres charges qui ne se sont pas encore présentées en entrée du paternoster alors qu'elles doivent se situer devant la charge donnée dans la séquence souhaitée.

Le mode (c) peut être vu comme un mécanisme permettant de ni accélérer ni retarder (aux sens précités) une charge donnée qui se présente en entrée du paternoster.

La capacité de séquencement (ordonnancement) du présent système est liée à la quantité de charges pouvant être stockées temporairement dans le paternoster (c'est-à-dire au nombre de nacelles du paternoster) et au nombre d'emplacements tampons.

La solution proposée présente de nombreux avantages, notamment mais non exclusivement :
- minimisation des contraintes de séquencement en sortie de l'unité externe (par exemple, magasin automatique) par un séquencement au plus proche du poste de préparation ;
- réduction de l'emprise au sol ;
- optimisation de la taille de l'unité externe (par exemple, magasin automatique) en mutualisant les ressources ;
- optimisation du rendement du système ;
- optimisation de la réactivité du système ;
- manipulation de charges multi formats si des nacelles à rouleaux motorisés sont utilisées ;
- optimisation des coûts si le système comprend plusieurs postes de préparation (mutualisation du paternoster et du ou des emplacements tampons) ;
- etc.

Selon une caractéristique particulière, dans le mode b), la charge subit, avant ou après le au moins un transfert tampon, un transfert raccourci entre deux nacelles du paternoster positionnées face à face.

De cette façon, la charge atteint plus rapidement l'emplacement tampon donné et on libère donc plus rapidement un emplacement de nacelle (utile pour le séquencement des autres charges).

Selon une caractéristique particulière, ladite au moins une séquence appartient au groupe comprenant :
- des séquences comprenant chacune uniquement des charges sources, chaque charge source étant un contenant de stockage de produit(s) ;
- des séquences comprenant chacune uniquement des charges cibles, chaque charge cible étant un contenant d'expédition de produit(s) ; et
- des séquences comprenant chacune une charge cible, qui est un contenant d'expédition de produit(s), suivie d'au moins une charge source, qui est un contenant de stockage de produit(s).

Dans une première implémentation particulière, chaque nacelle comprend N emplacements horizontalement adjacents et possédant chacun un rang compris entre 1 et N, avec N supérieur ou égal à deux, et le système comprend :
- au moins N convoyeurs aller d'entrée configurés chacun pour effectuer des transferts de charges vers un des N rangs d'emplacement, un rang d'emplacement distinct étant associé à chaque convoyeur aller d'entrée ; et
- pour chaque poste de préparation, N convoyeurs aller de sortie horizontalement adjacents et configurés chacun pour effectuer des transferts de charges venant d'un des N rangs d'emplacement, un rang d'emplacement distinct étant associé à chaque convoyeur aller de sortie.

Dans un exemple, un ou plusieurs des convoyeurs aller d'entrée peu(ven)t être mutualisé(s) entre plusieurs postes de préparation. Dans un autre exemple, le système comprend un jeu distinct de N convoyeurs aller d'entrée pour chaque poste de préparation. Dans cet autre exemple, le système comprend donc, pour chaque poste de préparation, N convoyeurs aller d'entrée (qui entrent les charges dans les N emplacements de nacelle) et N convoyeurs aller de sortie (qui évacuent les charges sortant des N emplacements de nacelle).

Dans une deuxième implémentation particulière, chaque nacelle comprend N emplacements horizontalement adjacents et possédant chacun un rang compris entre 1 et N, avec N supérieur ou égal à deux, et le système comprend au moins un dispositif de type table de transfert configuré pour effectuer des transferts de charges depuis ledit au moins un convoyeur aller d'entrée vers l'un quelconque des N rangs d'emplacement.

Dans cette deuxième implémentation particulière, chaque dispositif de type table de transfert permet de mutualiser un convoyeur aller d'entrée entre plusieurs rangs d'emplacements de nacelle.

Selon une caractéristique particulière de cette deuxième implémentation, ledit au moins un dispositif de type table de transfert est commun à au moins deux convoyeurs aller d'entrée horizontalement adjacents et est configuré pour effectuer des transferts de charges depuis l'un quelconque des au moins deux convoyeurs aller d'entrée vers l'un quelconque des N rangs d'emplacement.

Ainsi, chaque dispositif de type table de transfert est lui-même mutualisé entre au moins deux convoyeurs aller d'entrée.

Dans une troisième implémentation particulière (pouvant être combinée avec la deuxième implémentation), chaque nacelle comprend N emplacements horizontalement adjacents et possédant chacun un rang compris entre 1 et N, avec N supérieur ou égal à deux, et le système comprend, au moins pour un poste de préparation donné, au moins un dispositif de type table de transfert configuré pour effectuer des transferts de charges depuis l'un quelconque des N rangs d'emplacement vers ledit au moins un convoyeur aller de sortie configuré pour évacuer du paternoster des charges destinées audit poste de préparation donné.

Dans cette troisième implémentation particulière, chaque dispositif de type table de transfert permet de mutualiser un convoyeur aller de sortie entre plusieurs rangs d'emplacements de nacelle.

Selon une caractéristique particulière de cette troisième implémentation, ledit au moins un dispositif de type table de transfert est commun à au moins deux convoyeurs aller de sortie horizontalement adjacents et est configuré pour effectuer des transferts de charges depuis l'un quelconque des N rangs d'emplacement vers l'un quelconque des au moins deux convoyeurs aller de sortie.

Ainsi, chaque dispositif de type table de transfert est lui-même mutualisé entre au moins deux convoyeurs aller de sortie.

Dans une quatrième implémentation particulière, chaque nacelle comprend N emplacements horizontalement adjacents et possédant chacun un rang compris entre 1 et N, avec N supérieur ou égal à deux, et le système comprend :
- N convoyeurs aller de sortie horizontalement adjacents, configurés chacun pour recevoir des charges venant d'un des N rangs d'emplacement, un rang d'emplacement distinct étant associé à chaque convoyeur aller de sortie ;
- un convoyeur commun, configuré pour recevoir des charges venant des N convoyeurs aller de sortie ;
- N convoyeurs aller finaux, configurés chacun pour recevoir des charges venant du convoyeur commun et les amener à un des N postes de préparation ;
   et l'unité de pilotage est configurée pour organiser les mouvements des charges dans le système comme suit :
   * pour chacun des N rangs d'emplacement de nacelle, mise en séquence de charges selon une séquence parmi N séquences et fourniture des charges séquencées au convoyeur aller de sortie associé audit rang d'emplacement de nacelle ;
   * transfert depuis les N convoyeurs aller de sortie vers le convoyeur commun, des charges formant les N séquences ;
   * pour chacune des N séquences, transfert depuis le convoyeur commun vers l'un des N convoyeurs aller finaux, des charges formant ladite séquence.

De cette façon, le paternoster et les N convoyeurs aller de sortie (horizontalement adjacents) sont mutualisés entre plusieurs postes de préparation.

On notera que dans les première et troisième implémentations précitées, le paternoster est mutualisé entre plusieurs postes de préparation. En revanche, chaque poste de préparation est associé à un jeu de un ou plusieurs convoyeurs aller de sortie qui lui sont spécifiques et qui sont horizontalement adjacents. Donc chaque jeu de un ou plusieurs convoyeurs aller de sortie est disposé à un niveau vertical distinct, parmi tous les niveaux verticaux de sortie du paternoster (c'est-à-dire toutes les positions verticales auxquelles les nacelles marquent un arrêt pour une sortie de charge).

Dans une cinquième implémentation particulière, chaque nacelle comprend un unique emplacement, et le système comprend au moins un dispositif de type table de transfert configuré pour effectuer des transferts de charges depuis l'un quelconque d'au moins deux convoyeurs aller d'entrée horizontalement adjacents vers l'unique emplacement desdites nacelles.

Ainsi, le paternoster est plus simple (un seul emplacement par nacelle). Chaque dispositif de type table de transfert permet d'utiliser plusieurs convoyeurs aller d'entrée horizontalement adjacents.

Dans une sixième implémentation particulière (pouvant être combinée avec la cinquième implémentation), chaque nacelle comprend un unique emplacement, et le système comprend, au moins pour un poste de préparation donné, au moins un dispositif de type table de transfert configuré pour effectuer des transferts de charges depuis l'unique emplacement desdites nacelles vers l'un quelconque d'au moins deux convoyeurs aller de sortie horizontalement adjacents et configurés pour évacuer du paternoster des charges destinées audit poste de préparation donné.

Ainsi, chaque dispositif de type table de transfert permet d'utiliser plusieurs convoyeurs aller de sortie horizontalement adjacents.

Selon une caractéristique particulière, l'unité de pilotage est configurée pour traiter selon un des modes suivants chaque charge se présentant, via un convoyeur retour d'entrée, en entrée du paternoster après avoir été traitée par ledit au moins un poste de préparation :
(d) si la charge est encore nécessaire, dans un premier délai, pour réaliser ladite au moins une séquence : après introduction dans le paternoster, la charge subit au moins un transfert tampon vers un emplacement tampon donné, puis est ultérieurement replacée dans le paternoster et enfin présentée audit moins un convoyeur aller de sortie ;
(e) si la charge est encore nécessaire, dans un second délai inférieur au premier délai, pour réaliser ladite au moins une séquence : après introduction dans le paternoster, la charge y est maintenue jusqu'à être présentée audit au moins un convoyeur aller de sortie ;
(f) si la charge est encore nécessaire, dans un troisième délai inférieur au second délai, pour réaliser ladite au moins une séquence : après introduction dans le paternoster, la charge subit un transfert raccourci entre deux nacelles positionnées face à face, puis est présentée audit au moins un convoyeur aller de sortie ;
(g) si la charge n'est plus nécessaire pour réaliser ladite au moins une séquence, la charge est introduite dans le paternoster, puis acheminée vers ledit au moins un convoyeur retour de sortie.

Ainsi, le système permet également de gérer de manière optimale le retour des charges qui se présentent en entrée du paternoster après avoir été traitées par le(s) poste(s) de préparation. Les modes (d), (e) et (f) permettent la rétention au plus proche du poste de préparation d'une charge source ou d'une charge cible, en prévision d'une utilisation ultérieure. Ainsi on minimise les mouvements d'entrée/sortie dans l'unité externe (par exemple, magasin automatique). Le mode (e) permet de présenter à nouveau une charge (au même poste de préparation ou à un autre) plus rapidement qu'avec le mode (d). Le mode (f) permet de présenter à nouveau une charge (au même poste de préparation ou à un autre) plus rapidement qu'avec le mode (e). Le mode (g) permet le retour des charges dans l'unité externe.

Selon une caractéristique particulière, dans le mode (g), la charge subit, après introduction dans le paternoster, un transfert raccourci entre deux nacelles positionnées face à face.

De cette façon, on libère plus rapidement un emplacement de nacelle.

Selon une caractéristique particulière, dans le mode (d), la charge subit, avant ou après le au moins un transfert tampon, un transfert raccourci entre deux nacelles positionnées face à face.

De cette façon, on libère plus rapidement un emplacement de nacelle.

Dans un autre mode de réalisation de l'invention, il est proposé un procédé de séquencement de charges provenant d'au moins une unité externe, via au moins un convoyeur aller d'entrée, et fourniture à au moins un poste de préparation, via au moins un convoyeur aller de sortie, d'au moins une séquence comprenant des charges dans un ordre voulu, ledit procédé étant mis en œuvre dans un système comprenant : un élévateur piloté à nacelles circulant en boucle fermée, dit paternoster, chaque nacelle permettant de transporter au moins une charge et étant équipée d'un dispositif de transfert de charge sur ou en dehors de ladite nacelle ; au moins un emplacement tampon, configuré pour recevoir temporairement au moins une charge provenant du paternoster ; et une unité de pilotage. L'unité de pilotage organise les mouvements des charges dans le système et traite chaque charge se présentant en entrée du paternoster, via ledit au moins un convoyeur aller d'entrée, selon un des modes (a), (b) et (c) précités, sélectionné en fonction de la place souhaitée pour ladite charge dans ladite au moins une séquence.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, présente une vue de dessus d'un système de stockage automatisé ;
- la figure 2 présente une vue de côté d'un système selon un premier mode de réalisation de l'invention ;
- les figures 3A, 3B, 3C et 3D présentent différentes vues en coupe (selon A-A', B-B', C-C' et D-D' respectivement) du système de la figure 2 ;
- les figures 4A et 4B présentent différentes vues en coupe (selon D-D' et B-B' respectivement) d'un système selon une première variante de mise en œuvre du premier mode de réalisation de l'invention ;
- la figure 5 présente une vue de côté d'un système selon une deuxième variante de mise en œuvre du premier mode de réalisation de l'invention ;
- la figure 6 présente une vue de côté d'un système selon une troisième variante de mise en œuvre du premier mode de réalisation de l'invention ;
- les figures 7A, 7B, 7C et 7D présentent différentes vues en coupe (selon A-A', B-B', C-C' et D-D' respectivement) d'un système selon un deuxième mode de réalisation de l'invention ;
- la figure 8 présente une vue de dessus d'un système selon un troisième mode de réalisation de l'invention ;
- la figure 9 présente une vue de côté d'un système selon une quatrième variante de mise en œuvre du premier mode de réalisation de l'invention ;
- la figure 10 présente une vue de dessus d'un système selon un quatrième mode de réalisation de l'invention ; et
- la figure 11 présente un exemple de structure d'une unité de pilotage selon un mode de réalisation particulier de l'invention.

### 6. DESCRIPTION DÉTAILLÉE

Sur toutes les figures du présent document, les éléments identiques sont désignés par une même référence numérique.

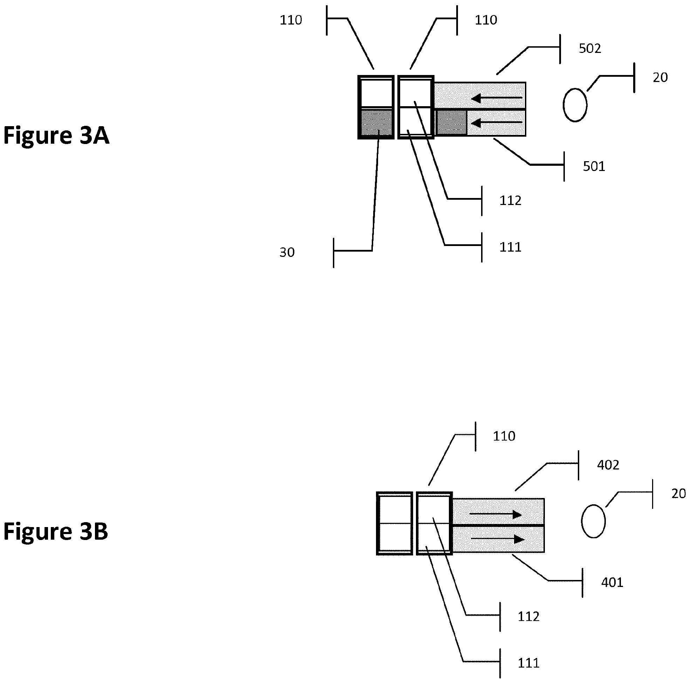

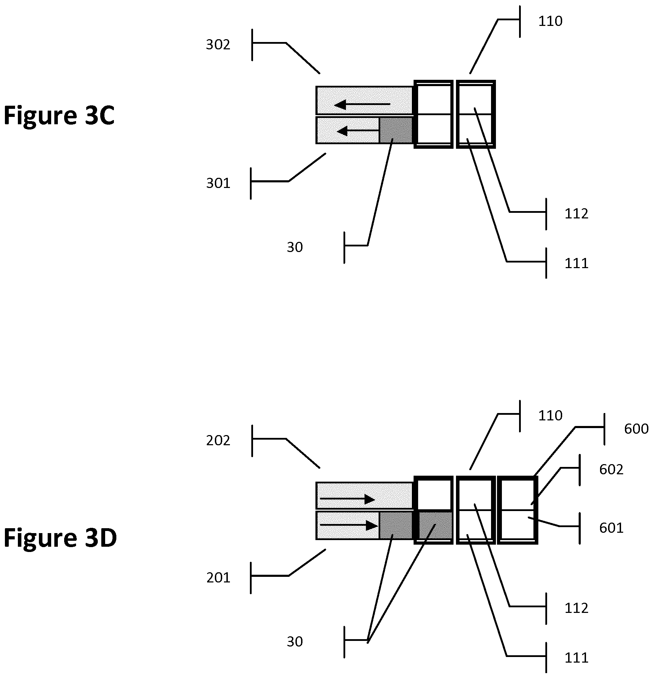

La **figure 2** (vue de côté) et les **figures 3A, 3B****,** **3C et 3D** (vues en coupe selon A-A', B-B', C-C' et D-D' respectivement) illustrent un système selon un premier mode de réalisation de l'invention, permettant de séquencer des charges sources et des charges cibles afin d'alimenter un poste de préparation de type 1 pour 1 (c'est-à-dire avec prélèvement d'un produit dans une charge source (contenant source) et dépose dans une charge cible (contenant cible)).

Dans ce premier mode de réalisation, le système est positionné entre une unité externe (non représentée), par exemple un magasin de stockage automatique, et un poste de préparation 20 occupé par un opérateur 21. Le système fournit au poste de préparation 20 d'une part une séquence de charges sources et d'autre part une séquence de charges cibles, chaque séquence respectant un ordre voulu.

Le système comprend un paternoster 100, c'est-à-dire un élévateur piloté muni d'un ensemble de nacelles 110 circulant en boucle fermée. Chaque nacelle 110 permet de transporter, sur deux emplacements (ou positions) horizontalement adjacents 111 et 112, deux charges 30 (par exemple de type bac, carton, plateau ou autre) positionnées l'une à côté de l'autre.

La nacelle est équipée d'un dispositif de transfert de charge qui est utilisé :
- soit seul (premier cas) : chaque emplacement 111 et 112 de la nacelle est par exemple équipé d'une section de convoyeur motorisé (formant ledit dispositif de transfert) permettant de transférer une charge 30 sur ou en dehors de la nacelle ;
- soit en coopération avec des moyens externes à la nacelle (second cas) : dans une variante, chaque emplacement 111 et 112 de la nacelle est équipé de rouleaux libres (formant ledit dispositif de transfert), dont la mise en mouvement est par exemple assurée par un moyen d'entraînement mécanique escamotable positionné en bout de chaque convoyeur ou emplacement tampon. D'autres moyens de mise en mouvement peuvent être envisagés. Les rouleaux libres de chaque nacelle sont par exemple solidarisés en rotation par des courroies rondes les reliant deux à deux en quinconce.

Les nacelles 110 du paternoster 100 circulent en mode pas à pas et en boucle fermée. Elles marquent un arrêt piloté face à un ensemble de positions verticales de transfert. Quand une nacelle occupe l'une de ces positions de transfert, le système permet un transfert de charge entre chaque emplacement de la nacelle et un équipement (convoyeur ou emplacement tampon) faisant face à cet emplacement de la nacelle.

En outre, lorsque deux nacelles 110 sont alignées horizontalement, l'une ou l'autre des charges ou les deux peuvent être transférées d'une nacelle vers l'autre (par mise en œuvre des dispositifs de transfert de charge des deux nacelles), afin d'acheminer rapidement les charges de l'autre côté de la boucle formée par le paternoster, à la manière d'un raccourci (aussi appelé « bypass ») et ce sans avoir à attendre la rotation de l'ensemble. Ainsi, dans le cas où chaque emplacement de la nacelle est équipé d'une section de convoyeur motorisé (premier cas précité), le transfert raccourci de charge entre deux nacelles est effectué simplement grâce à la section de convoyeur motorisé de chacune des deux nacelles. Dans le second cas précité où chaque emplacement de la nacelle est équipé de rouleaux libres, le transfert raccourci de charge entre deux nacelles est effectué grâce à au moins un moyen d'entraînement mécanique escamotable, qui vient en contact de chaque nacelle. La rotation de ce au moins un moyen d'entraînement est alors transmise aux rouleaux libres des deux nacelles, avec un même sens de rotation pour réaliser le transfert. Dans un mode de réalisation particulier (dit mutualisé), un même moyen d'entraînement est utilisé pour les deux nacelles alignées horizontalement.

Dans les paragraphes suivants sont présentés différents équipements (de type convoyeur ou emplacement tampon) compris dans le système et s'interfaçant avec le paternoster et ses nacelles, quand ces dernières marquent un arrêt piloté face aux positions de transfert précitées.

Un premier ensemble de deux convoyeurs aller d'entrée 201 et 202 permet d'acheminer des charges 30 en entrée du paternoster 100. Par exemple, celui référencé 201 permet d'acheminer les charges sources (soit typiquement des charges contenants des produits à prélever) et celui référencé 202 permet d'acheminer des charges cibles (soit typiquement des charges destinées à contenir des commandes à préparer). La configuration inverse est également possible (dans ce cas le convoyeur aller d'entrée référencé 201 permet d'acheminer des charges cibles alors que le convoyeur aller d'entrée référencé 202 permet d'acheminer des charges sources). Le convoyeur référencé 201 s'interface avec l'emplacement 111 des nacelles et celui référencé 202 s'interface avec l'emplacement 112 des nacelles.

Un deuxième ensemble de deux convoyeurs aller de sortie 401 et 402 permet d'acheminer et d'accumuler les charges 30 en sortie du paternoster 100 et à destination du poste de préparation 20. Par exemple, le convoyeur référencé 401 permet d'acheminer les charges sources à utiliser au poste de préparation 20 ; le convoyeur référencé 402 permet d'acheminer les charges cibles à utiliser à ce même poste de préparation. La configuration inverse est également possible.

Un troisième ensemble de deux convoyeurs retour d'entrée 501 et 502 permet d'évacuer les charges 30 vers le paternoster 100, après traitement au poste de préparation 20. Par exemple, le convoyeur référencé 501 permet d'évacuer les charges sources et celui référencé 502 permet d'évacuer les charges cibles. La configuration inverse est également possible.

Un quatrième ensemble de deux convoyeurs retour de sortie 301 et 302 permet d'évacuer les charges 30 en sortie du paternoster 100 vers l'unité externe (non représentée). Par exemple, le convoyeur référencé 301 permet d'évacuer les charges sources et le convoyeur référencé 302 permet d'évacuer les charges cibles. La configuration inverse est également possible. Le convoyeur référencé 301 s'interface avec l'emplacement 111 des nacelles et celui référencé 302 s'interface avec l'emplacement 112 des nacelles.

En outre, des emplacements tampons 600, permettant de stocker de façon temporaire les charges 30, sont situés en vis-à-vis des positions d'arrêt des nacelles (positions verticales de transfert), sur l'ensemble ou non des niveaux. Ces emplacements tampons sont par exemple situés à l'extérieur de la boucle formée par le paternoster 100. Certains emplacements tampons 600 sont simple profondeur, et permettent de disposer deux charges 30, sur deux positions 601 et 602 l'une à côté de l'autre. D'autres emplacements tampons 600 peuvent être multi profondeur, notamment double profondeur (avec deux positions avant 601 et 602, et deux positions arrière 601' et 602'). Chacune des positions 601, 602, 601' et 602' d'un emplacement tampon 600 est par exemple équipée d'un dispositif permettant de transférer une charge 30 sur ou en dehors de la dite position, et ce à partir de ou vers une nacelle du paternoster 100. Ce dispositif est par exemple une section de convoyeur motorisé. Par exemple, les positions 601 et 601' sont destinées à accueillir des charges sources et les positions 602, 602' des charges cibles.

Le système comprend également une unité de pilotage 40 qui permet d'organiser de façon optimale les mouvements des charges dans le système, et notamment sur le paternoster, les convoyeurs et dans les emplacements tampon, afin de mettre à disposition sur le convoyeur aller de sortie 401 des charges sources selon une première séquence et sur le convoyeur aller de sortie 402 des charges cibles selon une deuxième séquence. A cet effet, l'unité de pilotage 40 reçoit des informations (notamment un identifiant de charge) lues, sur les charges passant à différents endroits du système, par des dispositifs de lecture (non représentés), de type lecteur code à barre, lecteur d'étiquette RFID, etc. Ces endroits sont par exemple situés aux extrémités des différents convoyeurs.

Lorsqu'une charge accumulée sur un des convoyeurs aller d'entrée 201 ou 202 se présente en entrée du paternoster 100, l'unité de pilotage 40 détermine la destination de la charge en fonction de l'horizon d'utilisation ou de traitement de cette charge au poste de préparation 20.

Plus précisément, l'unité de pilotage est configurée pour traiter chaque charge se présentant en entrée du paternoster, via un des convoyeurs aller d'entrée, selon un des modes (a), (b) et (c) détaillés ci-dessous, sélectionné en fonction de la place souhaitée pour ladite charge dans ladite séquence.

Mode (a) (ou premier mode aller) : après introduction dans le paternoster 100, la charge 30 subit un transfert raccourci (« bypass ») entre deux nacelles 110 positionnées face à face, puis est présentée à un des convoyeurs aller de sortie 401 (pour une charge source) ou 402 (pour une charge cible). Le mode (a) est le mode permettant d'acheminer le plus rapidement une charge entrante jusqu'au poste de préparation. En effet, grâce au transfert raccourci entre deux nacelles, ce mode permet à la charge d'atteindre très rapidement le côté opposé du paternoster. Il est adapté pour une charge devant, d'après la séquence à réaliser (i.e. l'ordre voulu d'arrivée au poste de préparation), être présentée dans un horizon à très court terme. Le transfert raccourci permet de modifier l'ordre des charges pour atteindre l'ordre souhaité, puisqu'une charge bénéficiant de ce transfert raccourci va être présentée au poste de préparation avant certaines charges déjà présentes dans le paternoster (charges présentes dans des nacelles situées avant (en prenant le sens de parcours de la boucle fermée par les nacelles du paternoster) la nacelle recevant la charge lors du transfert raccourci). Ce mode (a) peut être vu comme un mécanisme permettant d'accélérer une charge donnée qui se présente, en entrée du paternoster, en retard par rapport à une ou plusieurs autres charges qui se sont déjà présentées en entrée du paternoster alors qu'elles doivent se situer derrière la charge donnée dans la séquence souhaitée.

Mode (b) (ou deuxième mode aller) : après introduction dans le paternoster 100, la charge 30 subit au moins un transfert tampon vers un emplacement tampon donné 600, puis est ultérieurement replacée dans le paternoster 100 et enfin présentée à un des convoyeurs aller de sortie 401 ou 402. La réalisation de plusieurs transferts tampons pour une même charge permet par exemple de rapprocher celle-ci au plus près du poste de préparation, tout en restant en zone tampon (c'est-à-dire dans l'un des emplacements tampons) et tout en construisant au fil de l'eau la séquence souhaitée. Optionnellement, la charge subit, avant ou après le au moins un transfert tampon, un transfert raccourci entre deux nacelles du paternoster positionnées face à face. Le mode (b) est le mode permettant d'acheminer le moins rapidement une charge entrante jusqu'au poste de préparation. En effet, grâce au transfert tampon (vers un emplacement tampon), ce mode permet de retarder le moment où la charge va être présentée au poste de préparation. Il est adapté pour une charge devant, d'après la séquence à réaliser (i.e. l'ordre voulu d'arrivée au poste de préparation), être présentée dans un délai relativement long. Le transfert tampon permet de modifier l'ordre des charges pour atteindre l'ordre souhaité, puisqu'une charge bénéficiant de ce transfert tampon va être présentée au poste de préparation après certaines charges pas encore présentes dans le paternoster. Ce mode (b) peut être vu comme un mécanisme permettant de retarder une charge donnée qui se présente, en entrée du paternoster, en avance par rapport à une ou plusieurs autres charges qui ne se sont pas encore présentées en entrée du paternoster alors qu'elles doivent se situer devant la charge donnée dans la séquence souhaitée.

Dans le mode (b), l'unité de pilotage détermine le niveau et la position (position avant 601 ou 602, ou position arrière 601' ou 602') de l'emplacement tampon 600, de façon à organiser l'ordre dans lequel les charges seront reprises sur une nacelle tout en minimisant les futurs mouvements du paternoster. Dans la configuration où les emplacements tampon 600 sont situés à l'extérieur de la boucle formée par l'élévateur 100, ces emplacements étant de ce fait gérés en mode LIFO ("last in, first out" ou "dernier entré premier sorti"), l'unité de pilotage gère également la contrainte d'accessibilité à la charge pour la mise ultérieure en séquence.

Mode (c) (ou troisième mode aller) : après introduction dans le paternoster 100, la charge 30 y est transportée « normalement », c'est-à-dire sans transfert raccourci (« bypass ») ni transfert tampon, puis présentée à un des convoyeurs aller de sortie 401 ou 402. Le mode (c) peut être vu comme un mécanisme permettant de ni accélérer ni retarder (aux sens précités) une charge donnée qui se présente en entrée du paternoster. Cette charge donnée subit un transfert « normal », au sens qu'elle entre dans le paternoster et en ressort quand la nacelle dans laquelle elle a été placée se trouve face à un des convoyeurs aller de sortie 401 (pour une charge source) ou 402 (pour une charge cible), (près avoir parcouru une portion de la boucle fermée du paternoster.

De la même manière, après traitement (utilisation) d'une charge 30 au poste de préparation 20, l'unité de pilotage achemine les charges qui se présentent, via l'un des convoyeurs retour d'entrée 501 (pour les charges sources) ou 502 (pour les charges cibles), en entrée du paternoster 100 et ce en fonction des demandes et besoins subsistant sur ces charges.

Plus précisément, l'unité de pilotage est configurée pour traiter chaque charge (charge source ou charge cible) se présentant en entrée du paternoster, via un des convoyeurs retour d'entrée 501 (pour une charge source) ou 502 (pour une charge cible), selon un des modes (d), (e), (f) et (g) détaillés ci-dessous.

Mode (d) (ou premier mode retour) : si la charge 30 est encore nécessaire (à un autre rang de la séquence), dans un premier délai, pour réaliser la séquence souhaitée, alors après introduction dans le paternoster, la charge subit au moins un transfert tampon vers un emplacement tampon donné, puis est ultérieurement replacée dans le paternoster et enfin présentée à un des convoyeurs aller de sortie 401 (pour une charge source) ou 402 (pour une charge cible). Optionnellement, dans le mode (d), la charge subit, avant ou après le au moins un transfert tampon, un transfert raccourci entre deux nacelles positionnées face à face.

Mode (e) (ou deuxième mode retour) : si la charge 30 est encore nécessaire (à un autre rang de la séquence), dans un second délai inférieur au premier délai, pour réaliser la séquence souhaitée, alors après introduction dans le paternoster, la charge y est maintenue jusqu'à être présentée à un des convoyeurs aller de sortie 401 (pour une charge source) ou 402 (pour une charge cible). Optionnellement, dans le mode (e), la charge subit, avant d'être présentée audit au moins un convoyeur aller de sortie 401 ou 402, un transfert raccourci entre deux nacelles positionnées face à face.

Mode (f) (ou troisième mode retour) : si la charge 30 est encore nécessaire (à un autre rang de la séquence), dans un troisième délai inférieur au second délai, pour réaliser la séquence souhaitée, alors après introduction dans le paternoster, la charge subit un transfert raccourci entre deux nacelles positionnées face à face, puis est présentée à un des convoyeurs aller de sortie 401 (pour une charge source) ou 402 (pour une charge cible).

Mode (g) (ou quatrième mode retour) : si elle n'est plus nécessaire pour réaliser la séquence souhaitée, la charge est introduite dans le paternoster, puis acheminée vers l'un des convoyeurs retour de sortie 301 (pour une charge source) ou 302 (pour une charge cible) et enfin vers l'unité externe (magasin de stockage, par exemple). Optionnellement, dans le mode (g), la charge subit, après introduction dans le paternoster, un transfert raccourci entre deux nacelles positionnées face à face.

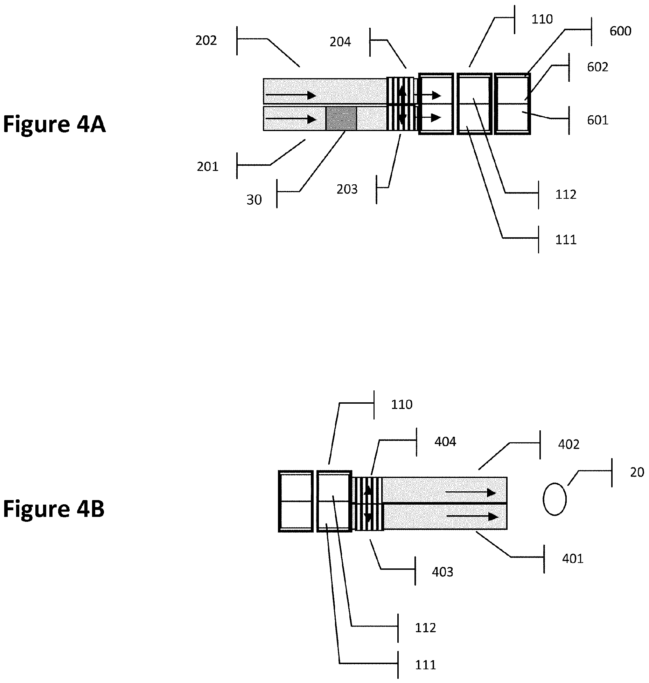

Les **figures 4A et 4B** illustrent une première variante du premier mode de réalisation de l'invention, variante dans laquelle les emplacements 111 et 112 des nacelles sont banalisés et peuvent aussi bien accueillir des charges sources que des charges cibles. Il est également possible de mettre deux charges de même type sur les emplacements 111 et 112 d'une même nacelle 110 (soit deux charges sources, soit deux charges cibles).

Pour ce faire, un dispositif de type table de transfert 203, 204 permet de diriger une charge 30 vers l'emplacement 111 ou l'emplacement 112 d'une nacelle et ce quel que soit le convoyeur de provenance (parmi les deux convoyeurs aller d'entrée 201 et 202). Selon ce principe, une charge 30 présente sur le convoyeur aller d'entrée 201 peut être dirigée vers l'emplacement 111 ou l'emplacement 112 d'une nacelle. De même, une charge 30 présente sur le convoyeur aller d'entrée 202 peut être dirigée vers l'emplacement 112 ou l'emplacement 111 d'une nacelle.

Dans cette même première variante, la mise en œuvre d'un dispositif de type table de transfert 403, 404 permet de diriger une charge 30 vers le convoyeur aller de sortie 401 ou vers le convoyeur aller de sortie 402 (pour acheminement jusqu'au poste de préparation 20) et ce quel que soit l'emplacement 111 ou 112 de provenance de la charge sur une nacelle.

Cette première variante favorise l'optimisation de l'occupation des nacelles, en permettant de charger deux charges quel que soit leur type (source ou cible). Elle permet également d'inverser dynamiquement l'attribution des convoyeurs aller de sortie 401 et 402 au type de charge, source ou cible. Ainsi en fonction de la configuration ou plus particulièrement dans le cas où le préparateur est gaucher le convoyeur 401 pourra être affecté à la distribution des charges cibles et le convoyeur 402 lui pourra être affecté à la distribution des charges sources ; soit l'inverse de la configuration par défaut.

Pour le chemin aller d'une charge, on a illustré sur la figure 4A la mise en œuvre d'un dispositif de type table de transfert 203, 204 commun aux deux convoyeurs aller d'entrée 201 et 202, et sur la figure 4B, la mise en œuvre d'un dispositif de type table de transfert 403, 404 commun aux deux convoyeurs aller de sortie 401 et 402. Ce principe peut être appliqué également pour le chemin retour d'une charge, avec mise en œuvre d'un dispositif de type table de transfert (non représenté) commun aux deux convoyeurs retour d'entrée 501 et 502, et la mise en œuvre d'un dispositif de type table de transfert (non représenté) commun aux deux convoyeurs retour de sortie 301 et 302.

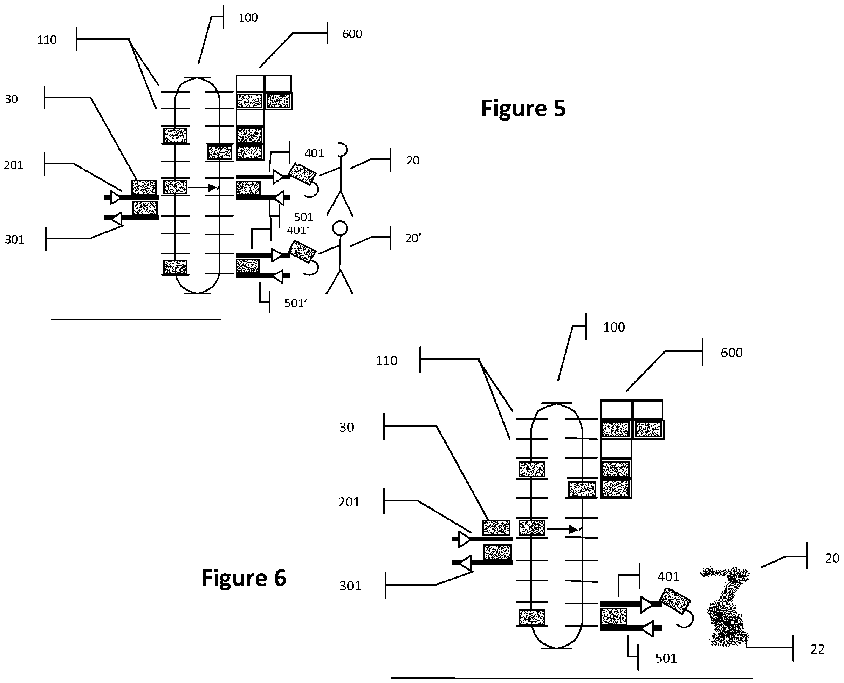

La **figure 5** illustre une deuxième variante du premier mode de réalisation de l'invention, variante dans laquelle le paternoster 100 permet d'alimenter deux postes de préparation 20 et 20' situés à des hauteurs différentes. Chaque poste de préparation dispose de ses propres convoyeurs aller de sortie 401, 402 ou 401', 402' (horizontalement adjacents à un niveau donné) et de ses propres convoyeurs retour d'entrée 501, 502 ou 501', 502' (horizontalement adjacents à un autre niveau donné) s'interfaçant avec le paternoster 100.

La **figure 6** illustre une troisième variante du premier mode de réalisation de l'invention, variante dans laquelle le poste de préparation 20 est équipé d'un dispositif robotisé 22 permettant de prélever un produit dans la charge source (acheminée par exemple par le convoyeur aller de sortie 401) et de le déposer dans la charge cible (acheminée par exemple par le convoyeur aller de sortie 402).

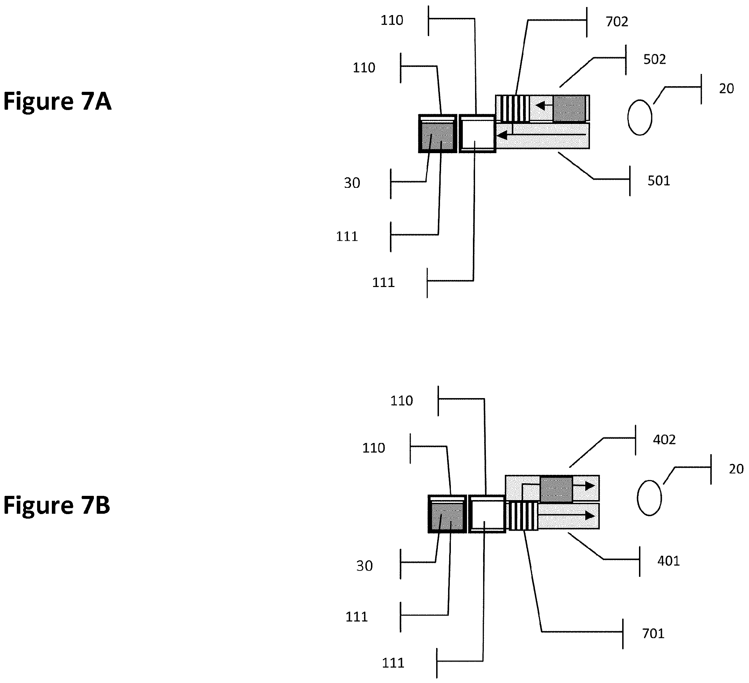

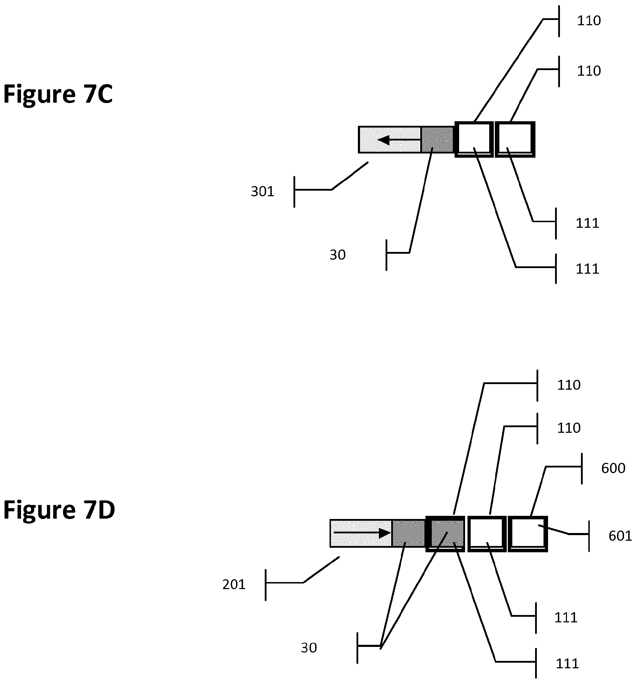

Un deuxième mode de réalisation de l'invention est illustré par la **figure 2** en relation avec les **figures 7A, 7B****,** **7C et 7D** (vues en coupe selon A-A', B-B', C-C' et D-D' respectivement).

Comme dans le premier mode de réalisation, le deuxième mode de réalisation permet de séquencer des charges sources et des charges cibles pour alimenter un ou plusieurs postes de préparation 20 de type 1 pour 1. Ces postes de préparation 20 peuvent être manuels, c'est-à-dire opérés par un préparateur, ou robotisés. En revanche et contrairement au premier mode de réalisation, ce deuxième mode met en œuvre un paternoster 100 avec des nacelles 110 à un seul emplacement 111.

Un unique convoyeur aller d'entrée 201 permet d'acheminer des charges sources et cibles 30 en entrée du paternoster 100. Il s'interface avec l'emplacement unique 111 des nacelles 110. Dans une variante (non illustrée), un ensemble de deux convoyeurs aller d'entrée 201 et 202 permet d'acheminer des charges sources et cibles 30, et un dispositif de type table de transfert permet de diriger chacune de ces charges 30 vers l'emplacement unique 111 d'une nacelle et ce quel que soit le convoyeur de provenance (parmi les deux convoyeurs aller d'entrée 201 et 202).

Un unique convoyeur retour de sortie 301 permet d'évacuer les charges sources et cibles 30 en sortie du paternoster 100. Il s'interface également avec l'emplacement unique 111 des nacelles 110. Dans une variante (non illustrée), un dispositif de type table de transfert permet de diriger chacune des charges 30 sortant de l'emplacement unique 111 d'une nacelle vers l'un quelconque de deux convoyeurs retour de sortie 301 et 302.

Un ensemble de deux convoyeurs aller de sortie 401 et 402 permet d'acheminer et d'accumuler les charges 30 en provenance du paternoster 100 et à destination du poste de préparation 20. Par exemple, le convoyeur aller de sortie 401 permet d'acheminer les charges sources à utiliser au poste de préparation 20, et le convoyeur aller de sortie 402 permet d'acheminer les charges cibles à utiliser à ce même poste de préparation. Les charges sources et cibles 30 sont transférées de la nacelle 110 en entrée du convoyeur aller de sortie 401. Par le biais d'un dispositif de type table de transfert 701, les charges cibles sont orientées sur le convoyeur aller de sortie 402 alors que les charges sources ne sont pas déviées.

Selon un principe équivalent, un ensemble de deux convoyeurs retour d'entrée 501 et 502 permet d'évacuer les charges sources et cibles 30 vers le paternoster 100, après traitement au poste de préparation 20. Par exemple, le convoyeur retour d'entrée 501 permet d'évacuer les charges sources et le convoyeur retour d'entrée 502 permet d'évacuer les charges cibles. Par le biais d'un dispositif de type table de transfert 702, les charges cibles en provenance du convoyeur retour d'entrée 502 sont réintroduites sur le convoyeur retour d'entrée 501. Seul le convoyeur retour d'entrée 501 s'interface avec les nacelles 110 du paternoster 100.

En outre, des emplacements tampons 600, permettant de stocker de façon temporaire les charges 30, sont situés en vis-à-vis des positions d'arrêt des nacelles (positions verticales de transfert), sur l'ensemble ou non des niveaux. Ces emplacements tampons sont par exemple situés à l'extérieur de la boucle formée par le paternoster 100. Certains emplacements tampons 600 sont simple profondeur, et permettent de disposer une charge 30, sur une position 601. D'autres emplacements tampons 600 peuvent être multi profondeur, notamment double profondeur (avec une position avant 601 et une position arrière 601').

Les grands principes de pilotage du premier mode de réalisation (mis en œuvre par l'unité de pilotage) s'appliquent à ce deuxième mode, tout en prenant en compte les particularités de la configuration liées à l'usage de nacelles avec emplacement unique.

Dans un troisième mode de réalisation de l'invention, le système comprend un paternoster 100 avec des nacelles 110 à deux emplacements 111 et 112, qui permet de séquencer uniquement des charges source (c'est-à-dire type de contenant : colis, bac, carton, plateau...). Les charges cibles sont situées et gérées en dehors du présent système. En d'autres termes, dans ce troisième mode et contrairement au premier mode de réalisation, l'ensemble des convoyeurs aller (201, 202 et 401, 402) et retour (301, 302 et 501, 502), ainsi que l'ensemble des emplacements tampon 600 sont destinés à la gestion des charges sources.

Les principes décrits pour le premier mode de réalisation de l'invention s'appliquent à ce troisième mode.

Il est à noter que dans certains cas d'usage, la charge source est prélevée en l'état, au poste de préparation 20, pour être déposée sur ou dans une charge cible. En conséquence, la réintroduction de la charge source dans le système n'a pas lieu d'être et les convoyeurs retour (501, 502 et 301, 302) ne sont pas nécessaires. Ce cas correspond par exemple au séquencement de colis (charges sources) avant palettisation.

Dans d'autres cas, un élément de la charge source est prélevé pour être déposé sur ou dans une charge cible. En conséquence, la réintroduction de la charge source doit être gérée via les convoyeurs retour (501, 502 et 301, 302). Ce cas correspond par exemple au séquencement de colis disposés sur des plateaux ; les plateaux étant les charges sources.

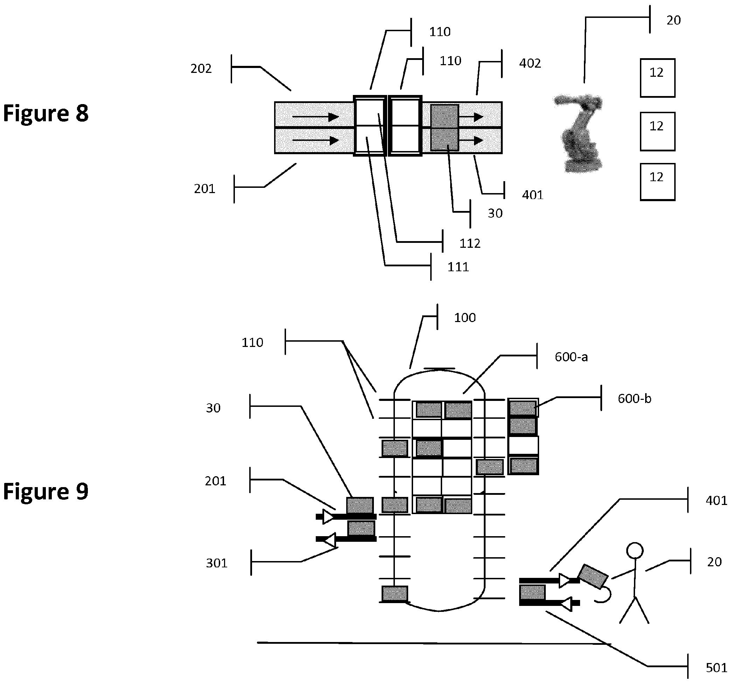

La **figure 8** présente une vue de dessus d'un exemple de mise en œuvre de ce troisième mode de réalisation de l'invention dans le cadre d'un poste de palettisation 20. Le poste de palettisation 20 permet de constituer une ou plusieurs charges cibles 12 (par exemple de type palette, roll ou équivalent) à partir de charges sources 30 (par exemple de type colis, pack, barquette ou autre). Selon les cas, le poste de palettisation permet de constituer soit une charge cible (palette) 12 à la fois soit plusieurs charges cibles simultanément. Le poste de palettisation 20 peut être opéré manuellement, être partiellement automatisé, être robotisé, ou être opéré selon un tout autre principe. Dans l'exemple illustré sur la figure 8, le poste de palettisation 20 est robotisé et permet de constituer plusieurs charges cibles 12 (en l'occurrence trois palettes) à partir de charges sources 30 distribuées de façon séquencée au poste de préparation via les convoyeurs aller de sortie 401 et 402.

La **figure 9** illustre une quatrième variante du premier mode de réalisation de l'invention, variante dans laquelle une partie des emplacements tampons 600 (notée 600-a sur la figure 9) est située à l'intérieur de la boucle fermée décrite par le circuit des nacelles 110 et l'autre partie des emplacements tampons 600 (notée 600-b) est située à l'extérieur de cette même boucle, ainsi que les différents convoyeurs (201, 202, 301, 302, 401, 402, 501, 502). Les emplacements des parties 600-a et 600-b peuvent être mono ou multi profondeur en fonction des besoins.

Le principe consistant à placer au moins une partie des emplacements tampons à l'intérieur de la boucle fermée décrite par le circuit des nacelles peut être mis en œuvre quel que soit le mode de réalisation de l'invention.

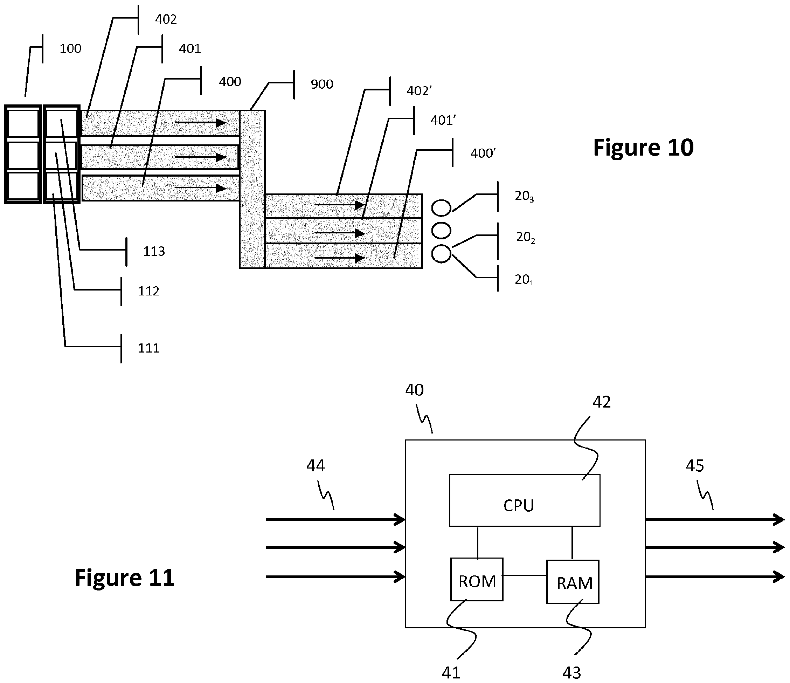

Un quatrième mode de réalisation de l'invention est illustré par la **figure 10**, dans lequel le système permet d'alimenter N postes de préparation 20₁, 20₂ et 20₃ (N=3 dans l'exemple illustré) avec des séquences de charges comprenant chacune une charge cible suivie d'une ou plusieurs charges sources (les charges sources étant séquencées ou non entre elles).

Le paternoster 100 possède des nacelles 110 à N emplacements 111, 112 et 113.

Le système comprend N convoyeurs aller de sortie 400, 401 et 402, horizontalement adjacents et configurés chacun pour recevoir des charges venant des nacelles (le convoyeur aller de sortie référencé 400 est associé à l'emplacement de nacelle 111, celui référencé 401 est associé à l'emplacement de nacelle 112 et celui référencé 402 est associé à l'emplacement de nacelle 113).

Le système comprend également un convoyeur commun 900, configuré pour recevoir des charges venant des N convoyeurs aller de sortie 400, 401 et 402, et N convoyeurs aller finaux 400', 401' et 402', configurés chacun recevoir des charges venant du convoyeur commun 900 et les amener à un des N postes de préparation 20₁, 20₂ et 20₃.

L'unité de pilotage 40 est configurée pour organiser les mouvements des charges dans le système comme suit :
- acheminement sur chacun des N convoyeurs aller de sortie 400, 401 et 402 de charges selon une séquence distincte (il y a donc N séquences au total). Par exemple, les charges arrivant sur le convoyeur 400, via l'emplacement 111 de nacelles successives, forment une première séquence destinée au poste de préparation 20₁ ; les charges arrivant sur le convoyeur 401, via l'emplacement 112 de nacelles successives, forment une deuxième séquence destinée au poste de préparation 20₂ ; les charges arrivant sur le convoyeur 402, via l'emplacement 113 de nacelles successives, forment une troisième séquence destinée au poste de préparation 20₃ ;
- transfert depuis les N convoyeurs aller de sortie 400, 401 et 402 vers le convoyeur commun 900, des charges formant les N séquences ;
- pour chacune des N séquences, transfert depuis le convoyeur commun 900 vers l'un des N convoyeurs aller finaux 400', 401' et 402', des charges formant la séquence. Par exemple, les charges formant la première séquence (destinée au poste de préparation 20₁) sont transférées sur le convoyeur aller final 400' ; les charges formant la deuxième séquence (destinée au poste de préparation 20₂) sont transférées sur le convoyeur aller final 401' ; les charges formant la troisième séquence (destinée au poste de préparation 20₃) sont transférées sur le convoyeur aller final 402'.

Si les N convoyeurs aller finaux 400', 401' et 402' sont banalisés (c'est-à-dire si chacun d'eux n'est pas associé à un rang d'emplacement distinct), chaque convoyeur aller final peut recevoir des séquences successives qui ne proviennent pas toutes du même convoyeurs aller de sortie 400, 401 et 402.

La **figure 11** présente un exemple de structure de l'unité de pilotage 40 précitée, selon un mode de réalisation particulier de l'invention. L'unité de pilotage 40 comprend une mémoire vive 43 (par exemple une mémoire RAM), une unité de traitement 42, équipée par exemple d'un processeur, et pilotée par un programme d'ordinateur stocké dans une mémoire morte 41 (par exemple une mémoire ROM ou un disque dur). A l'initialisation, les instructions de code du programme d'ordinateur sont par exemple chargées dans la mémoire vive 43 avant d'être exécutées par le processeur de l'unité de traitement 42. L'unité de traitement 42 reçoit des signaux d'entrée 44, les traite et génère des signaux de sortie 45.

Les signaux d'entrée 44 comprennent diverses informations relatives au fonctionnement du système, notamment les identifiants de charge lus (par des dispositifs de lecture de type lecteur code à barre, lecteur d'étiquette RFID, etc.) sur les charges quand elles passent à différents endroits du système (par exemple aux extrémités des différents convoyeurs).

Les signaux de sortie 45 comprennent diverses informations de contrôle pour le pilotage (contrôle) des équipements du système (notamment le paternoster, les convoyeurs, les dispositifs de type table de transfert et les emplacements tampons), afin de gérer les mouvements des charges dans le système.

Cette figure 11 illustre seulement une implémentation particulière parmi plusieurs possibles. En effet, l'unité de pilotage 40 se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où l'unité de pilotage est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Système de séquencement pour au moins un poste de préparation (20), configuré pour séquencer des charges (30) provenant d'au moins une unité externe, via au moins un convoyeur aller d'entrée (201, 202), et fournir audit au moins un poste de préparation, via au moins un convoyeur aller de sortie (401, 402), au moins une séquence comprenant des charges dans un ordre voulu, **caractérisé en ce qu'**il comprend :
- un élévateur piloté à nacelles circulant en boucle fermée, dit paternoster (100), chaque nacelle (110) permettant de transporter au moins une charge (30) et étant équipée d'un dispositif de transfert de charge sur ou en dehors de ladite nacelle ;
- au moins un emplacement tampon (600), configuré pour recevoir temporairement au moins une charge (30) provenant du paternoster (100) ; et
- une unité de pilotage (40), configurée pour organiser les mouvements des charges dans le système et traiter chaque charge (30) se présentant en entrée du paternoster (100), via ledit au moins un convoyeur aller d'entrée (201, 202), selon un des modes suivants, sélectionné en fonction de la place souhaitée pour ladite charge dans ladite au moins une séquence :
(a) après introduction dans le paternoster (100), la charge (30) subit un transfert raccourci entre deux nacelles (110) positionnées face à face, par mise en œuvre des dispositifs de transfert de charge des deux nacelles, puis est présentée audit au moins un convoyeur aller de sortie (401, 402) ;
(b) après introduction dans le paternoster (100), la charge (30) subit au moins un transfert tampon vers un emplacement tampon donné (600), puis est ultérieurement replacée dans le paternoster (100) et enfin présentée audit moins un convoyeur aller de sortie (401, 402) ;
(c) après introduction dans le paternoster (100), la charge (30) y est transportée sans transfert raccourci ni transfert tampon, puis présentée audit au moins un convoyeur aller de sortie (401, 402).

2. Système selon la revendication 1, **caractérisé en ce que**, dans le mode b), la charge (30) subit, avant ou après le au moins un transfert tampon, un transfert raccourci entre deux nacelles (110) du paternoster (100) positionnées face à face.

3. Système selon l'une quelconque des revendications 1 et 2, **caractérisé en ce que** ladite au moins une séquence appartient au groupe comprenant :
- des séquences comprenant chacune uniquement des charges sources, chaque charge source étant un contenant de stockage de produit(s) ;
- des séquences comprenant chacune uniquement des charges cibles, chaque charge cible étant un contenant d'expédition de produit(s) ; et
- des séquences comprenant chacune une charge cible, qui est un contenant d'expédition de produit(s), suivie d'au moins une charge source, qui est un contenant de stockage de produit(s).

4. Système selon l'une quelconque des revendications 1 à 3, **caractérisé en ce que** chaque nacelle (110) comprend N emplacements (111, 112) horizontalement adjacents et possédant chacun un rang compris entre 1 et N, avec N supérieur ou égal à deux, et **en ce que** le système comprend :
- au moins N convoyeurs aller d'entrée (201, 202) configurés chacun pour effectuer des transferts de charges vers un des N rangs d'emplacement, un rang d'emplacement distinct étant associé à chaque convoyeur aller d'entrée (201, 202) ; et
- pour chaque poste de préparation, N convoyeurs aller de sortie (401, 402) horizontalement adjacents et configurés chacun pour effectuer des transferts de charges venant d'un des N rangs d'emplacement, un rang d'emplacement distinct étant associé à chaque convoyeur aller de sortie (201, 202).

5. Système selon l'une quelconque des revendications 1 à 3, **caractérisé en ce que** chaque nacelle (110) comprend N emplacements (111, 112) horizontalement adjacents et possédant chacun un rang compris entre 1 et N, avec N supérieur ou égal à deux, et **en ce que** le système comprend au moins un dispositif de type table de transfert (203, 204) configuré pour effectuer des transferts de charges depuis ledit au moins un convoyeur aller d'entrée (201, 202) vers l'un quelconque des N rangs d'emplacement.

6. Système selon la revendication 5, **caractérisé en ce que** ledit au moins un dispositif de type table de transfert (203, 204) est commun à au moins deux convoyeurs aller d'entrée (201, 202) horizontalement adjacents et est configuré pour effectuer des transferts de charges depuis l'un quelconque des au moins deux convoyeurs aller d'entrée (201, 202) vers l'un quelconque des N rangs d'emplacement.

7. Système selon l'une quelconque des revendications 1 à 3, **caractérisé en ce que** chaque nacelle (110) comprend N emplacements (111, 112) horizontalement adjacents et possédant chacun un rang compris entre 1 et N, avec N supérieur ou égal à deux, et **en ce que** le système comprend, au moins pour un poste de préparation donné, au moins un dispositif de type table de transfert (403, 404) configuré pour effectuer des transferts de charges depuis l'un quelconque des N rangs d'emplacement vers ledit au moins un convoyeur aller de sortie (401, 402) configuré pour évacuer du paternoster (100) des charges (30) destinées audit poste de préparation donné.

8. Système selon la revendication 7, **caractérisé en ce que** ledit au moins un dispositif de type table de transfert (403, 404) est commun à au moins deux convoyeurs aller de sortie (401, 402) horizontalement adjacents et est configuré pour effectuer des transferts de charges depuis l'un quelconque des N rangs d'emplacement vers l'un quelconque des au moins deux convoyeurs aller de sortie (401, 402).

9. Système selon l'une quelconque des revendications 1 à 3, **caractérisé en ce que** chaque nacelle (110) comprend N emplacements horizontalement adjacents et possédant chacun un rang compris entre 1 et N, avec N supérieur ou égal à deux, et **en ce que** le système comprend :
- N convoyeurs aller de sortie (400, 401, 402) horizontalement adjacents, configurés chacun pour recevoir des charges (30) venant d'un des N rangs d'emplacement, un rang d'emplacement distinct étant associé à chaque convoyeur aller de sortie (400, 401, 402) ;
- un convoyeur commun (900), configuré pour recevoir des charges venant des N convoyeurs aller de sortie (400, 401, 402) ;
- N convoyeurs aller finaux (400', 401', 402'), configurés chacun pour recevoir des charges venant du convoyeur commun (900) et les amener à un des N postes de préparation ;
et **en ce que** l'unité de pilotage (40) est configurée pour organiser les mouvements des charges dans le système comme suit :
* pour chacun des N rangs d'emplacement de nacelle, mise en séquence de charges selon une séquence parmi N séquences et fourniture des charges séquencées au convoyeur aller de sortie associé audit rang d'emplacement de nacelle ;
* transfert depuis les N convoyeurs aller de sortie vers le convoyeur commun, des charges formant les N séquences ;
* pour chacune des N séquences, transfert depuis le convoyeur commun vers l'un des N convoyeurs aller finaux, des charges formant ladite séquence.

10. Système selon l'une quelconque des revendications 1 à 3, **caractérisé en ce que** chaque nacelle (110) comprend un unique emplacement, et **en ce que** le système comprend au moins un dispositif de type table de transfert configuré pour effectuer des transferts de charges depuis l'un quelconque d'au moins deux convoyeurs aller d'entrée (201, 202) horizontalement adjacents vers l'unique emplacement desdites nacelles.

11. Système selon l'une quelconque des revendications 1 à 3, **caractérisé en ce que** chaque nacelle (110) comprend un unique emplacement, et **en ce que** le système comprend, au moins pour un poste de préparation donné, au moins un dispositif de type table de transfert (701) configuré pour effectuer des transferts de charges depuis l'unique emplacement desdites nacelles vers l'un quelconque d'au moins deux convoyeurs aller de sortie (401, 402) horizontalement adjacents et configurés pour évacuer du paternoster des charges destinées audit poste de préparation donné.

12. Système selon l'une quelconque des revendications 1 à 11, **caractérisé en ce que** l'unité de pilotage (40) est configurée pour traiter selon un des modes suivants chaque charge (30) se présentant, via un convoyeur retour d'entrée (501, 502), en entrée du paternoster après avoir été traitée par ledit au moins un poste de préparation :
(d) si la charge est encore nécessaire, dans un premier délai, pour réaliser ladite au moins une séquence : après introduction dans le paternoster (100), la charge subit au moins un transfert tampon vers un emplacement tampon donné (600), puis est ultérieurement replacée dans le paternoster (100) et enfin présentée audit moins un convoyeur aller de sortie (401, 402);
(e) si la charge est encore nécessaire, dans un second délai inférieur au premier délai, pour réaliser ladite au moins une séquence : après introduction dans le paternoster (100), la charge y est maintenue jusqu'à être présentée audit au moins un convoyeur aller de sortie (401, 402) ;
(f) si la charge est encore nécessaire, dans un troisième délai inférieur au second délai, pour réaliser ladite au moins une séquence : après introduction dans le paternoster (100), la charge subit un transfert raccourci entre deux nacelles (110) positionnées face à face, puis est présentée audit au moins un convoyeur aller de sortie (401, 402) ;
(g) si la charge n'est plus nécessaire pour réaliser ladite au moins une séquence, la charge est introduite dans le paternoster (100), puis acheminée vers un convoyeur retour de sortie (301, 302).

13. Système selon la revendication 12, **caractérisé en ce que**, dans le mode (g), la charge (30) subit, après introduction dans le paternoster (100), un transfert raccourci entre deux nacelles (110) positionnées face à face.

14. Système selon la revendication 12, **caractérisé en ce que**, dans le mode (d), la charge (30) subit, avant ou après le au moins un transfert tampon, un transfert raccourci entre deux nacelles (110) positionnées face à face.

15. Procédé de séquencement de charges (30) provenant d'au moins une unité externe, via au moins un convoyeur aller d'entrée (201, 202), et fourniture à au moins un poste de préparation (20), via au moins un convoyeur aller de sortie (401, 402), d'au moins une séquence comprenant des charges (30) dans un ordre voulu, ledit procédé étant mis en œuvre dans un système comprenant :
- un élévateur piloté à nacelles circulant en boucle fermée, dit paternoster (100), chaque nacelle (110) permettant de transporter au moins une charge et étant équipée d'un dispositif de transfert de charge sur ou en dehors de ladite nacelle ;
- au moins un emplacement tampon (600), configuré pour recevoir temporairement au moins une charge (30) provenant du paternoster (100) ; et
- une unité de pilotage (40) ;
**caractérisé en ce que** l'unité de pilotage organise les mouvements des charges dans le système et traite chaque charge (30) se présentant en entrée du paternoster (100), via ledit au moins un convoyeur aller d'entrée (201, 202), selon un des modes suivants, sélectionné en fonction de la place souhaitée pour ladite charge dans ladite au moins une séquence :
(a) après introduction dans le paternoster (100), la charge (30) subit un transfert raccourci entre deux nacelles (110) positionnées face à face, par mise en œuvre des dispositifs de transfert de charge des deux nacelles, puis est présentée audit au moins un convoyeur aller de sortie (401, 402) ;
(b) après introduction dans le paternoster (100), la charge (30) subit au moins un transfert tampon vers un emplacement tampon donné (600), puis est ultérieurement replacée dans le paternoster (100) et enfin présentée audit moins un convoyeur aller de sortie (401, 402);
(c) après introduction dans le paternoster (100), la charge (30) y est transportée sans transfert raccourci ni transfert tampon, puis présentée audit au moins un convoyeur aller de sortie (401, 402).

## Patentansprüche

1. Sequenzierungssystem für mindestens eine Vorbereitungsstation (20), das dazu ausgebildet ist, Lasten (30), die von mindestens einer externen Einheit über mindestens einen vorwärts laufenden Zuförderer (201, 202) kommen, zu sequenzieren und der mindestens einen Vorbereitungsstation über mindestens einen vorwärts laufenden Wegförderer (401, 402) mindestens eine Sequenz zu liefern, die Lasten in einer gewünschten Reihenfolge umfasst, **dadurch gekennzeichnet, dass** es umfasst:
- einen gesteuerten Aufzug mit endlos umlaufenden Gondeln, Paternoster (100) genannt, wobei jede Gondel (110) es ermöglicht, mindestens eine Last (30) zu transportieren, und mit einer Lastübergabevorrichtung an oder außerhalb der Gondel ausgestattet ist;
- mindestens einen Pufferlagerplatz (600), der dazu ausgelegt ist, mindestens eine vom Paternoster (100) kommende Last (30) vorübergehend aufzunehmen; und
- eine Steuerungseinheit (40), die dazu ausgelegt ist, die Bewegungen der Lasten im System zu organisieren und jede Last (30), die sich im Einlauf des Paternosters (100) über den mindestens einen vorwärts laufenden Zuförderer (201, 202) präsentiert, gemäß einem der folgenden Modi zu behandeln, der in Abhängigkeit von der für die Last in der mindestens einen Sequenz gewünschten Position gewählt wird:
(a) nach dem Einschleusen in den Paternoster (100) erfährt die Last (30) eine abgekürzte Übergabe zwischen zwei einander gegenüber angeordneten Gondeln (110) durch Einsatz der Lastübergabevorrichtungen der beiden Gondeln und wird dann dem mindestens einen vorwärts laufenden Wegförderer (401, 402) präsentiert;
(b) nach dem Einschleusen in den Paternoster (100) erfährt die Last (30) mindestens eine Pufferübergabe an einen gegebenen Pufferlagerplatz (600), wird dann zu einem späteren Zeitpunkt wieder in den Paternoster (100) gesetzt und schließlich dem mindestens einen vorwärts laufenden Wegförderer (401, 402) präsentiert;
(c) nach dem Einschleusen in den Paternoster (100) wird die Last (30) darin ohne abgekürzte Übergabe oder Pufferübergabe transportiert und dann dem mindestens einen vorwärts laufenden Wegförderer (401, 402) präsentiert.

2. System nach Anspruch 1, **dadurch gekennzeichnet, dass** die Last (30) im Modus b) vor oder nach der mindestens einen Pufferübergabe eine abgekürzte Übergabe zwischen zwei einander gegenüber angeordneten Gondeln (110) des Paternosters (100) erfährt.

3. System nach einem der Ansprüche 1 und 2, **dadurch gekennzeichnet, dass** die mindestens eine Sequenz der Gruppe angehört, die umfasst:
- Sequenzen, die jeweils nur Quell-Lasten umfassen, wobei jede Quell-Last ein Produktlagerbehälter ist;
- Sequenzen, die jeweils nur Ziel-Lasten umfassen, wobei jede Ziel-Last ein Produktversandbehälter ist; und
- Sequenzen, die jeweils eine Ziel-Last, die ein Produktversandbehälter ist, gefolgt von mindestens einer Quell-Last, die ein Produktlagerbehälter ist, umfassen.

4. System nach einem der Ansprüche 1 bis 3, **dadurch gekennzeichnet, dass** jede Gondel (110) N Lagerplätze (111, 112) umfasst, die horizontal benachbart sind und jeweils einen Rang zwischen 1 und N besitzen, wobei N größer oder gleich zwei ist, und dadurch, dass das System umfasst:
- mindestens N vorwärts laufende Zuförderer (201, 202), die jeweils dazu ausgelegt sind, Übergaben von Lasten an einen der N Lagerplatzränge durchzuführen, wobei jedem vorwärts laufenden Zuförderer (201, 202) ein anderer Lagerplatzrang zugeordnet ist; und
- für jede Vorbereitungsstation N vorwärts laufende Wegförderer (401, 402), die horizontal benachbart sind und dazu ausgelegt sind, Übergaben von Lasten, die von einem der N Lagerplatzränge kommen, durchzuführen, wobei jedem vorwärts laufenden Wegförderer (201, 202) ein anderer Lagerplatzrang zugeordnet ist.

5. System nach einem der Ansprüche 1 bis 3, **dadurch gekennzeichnet, dass** jede Gondel (110) N Lagerplätze (111, 112) umfasst, die horizontal benachbart sind und jeweils einen Rang zwischen 1 und N besitzen, wobei N größer oder gleich zwei ist, und dadurch, dass das System mindestens eine Vorrichtung von der Art eines Übergabetisches (203, 204) umfasst, die dazu ausgelegt ist, Übergaben von Lasten von dem mindestens einen vorwärts laufenden Zuförderer (201, 202) an einen beliebigen der N Lagerplatzränge durchzuführen.

6. System nach Anspruch 5, **dadurch gekennzeichnet, dass** die mindestens eine Vorrichtung von der Art eines Übergabetisches (203, 204) mindestens zwei horizontal benachbarten vorwärts laufenden Zuförderern (201, 202) gemein ist und dazu ausgelegt ist, Übergaben von Lasten von einem beliebigen der mindestens zwei vorwärts laufenden Zuförderer (201, 202) an einen beliebigen der N Lagerplatzränge durchzuführen.

7. System nach einem der Ansprüche 1 bis 3, **dadurch gekennzeichnet, dass** jede Gondel (110) N Lagerplätze (111, 112) umfasst, die horizontal benachbart sind und jeweils einen Rang zwischen 1 und N besitzen, wobei N größer oder gleich zwei ist, und dadurch, dass das System mindestens für eine gegebene Vorbereitungsstation mindestens eine Vorrichtung von der Art eines Übergabetisches (403, 404) umfasst, die dazu ausgelegt ist, Übergaben von Lasten von einem beliebigen der N Lagerplatzränge zu dem mindestens einen vorwärts laufenden Wegförderer (401, 402) durchzuführen, der dazu ausgelegt ist, Lasten (30), die für die gegebene Vorbereitungsstation bestimmt sind, aus dem Paternoster (100) auszuschleusen.

8. System nach Anspruch 7, **dadurch gekennzeichnet, dass** die mindestens eine Vorrichtung von der Art eines Übergabetisches (403, 404) mindestens zwei horizontal benachbarten vorwärts laufenden Wegförderern (401, 402) gemein ist und dazu ausgelegt ist, Übergaben von Lasten von einem beliebigen der N Lagerplatzränge zu einem beliebigen der mindestens zwei vorwärts laufenden Wegförderer (401, 402) durchzuführen.

9. System nach einem der Ansprüche 1 bis 3, **dadurch gekennzeichnet, dass** jede Gondel (110) N Lagerplätze umfasst, die horizontal benachbart sind und jeweils einen Rang zwischen 1 und N besitzen, wobei N größer oder gleich zwei ist, und dadurch, dass das System umfasst:
- N horizontal benachbarte vorwärts laufende Wegförderer (400, 401, 402), die jeweils dazu ausgelegt sind, Lasten (30) aufzunehmen, die von einem der N Lagerplatzränge kommen, wobei jedem vorwärts laufenden Wegförderer (400, 401, 402) ein anderer Lagerplatzrang zuordnet ist;
- einen gemeinsamen Förderer (900), der dazu ausgelegt ist, Lasten aufzunehmen, die von den N vorwärts laufenden Wegförderern (400, 401, 402) kommen;
- N vorwärts laufende finale Förderer (400', 401', 402'), die jeweils dazu ausgelegt sind, Lasten aufzunehmen, die vom gemeinsamen Förderer (900) kommen, und sie einer der N Vorbereitungsstationen zuzuführen;
und dadurch, dass die Steuerungseinheit (40) dazu ausgelegt ist, die Bewegungen der Lasten im System wie folgt zu organisieren:
* Sequenzieren der Lasten für jeden der N Lagerplatzränge einer Gondel gemäß einer Sequenz unter N Sequenzen und Liefern der sequenzierten Lasten an den vorwärts laufenden Wegförderer, der dem Lagerplatzrang der Gondel zugeordnet ist;
* Übergabe der die N Sequenzen bildenden Lasten von den N vorwärts laufenden Wegförderern an den gemeinsamen Förderer;
* für jede der N Sequenzen, Übergabe der die Sequenz bildenden Lasten von dem gemeinsamen Förderer an einen der N vorwärts laufenden finalen Förderer.

10. System nach einem der Ansprüche 1 bis 3, **dadurch gekennzeichnet, dass** jede Gondel (110) einen einzigen Lagerplatz umfasst und dass das System mindestens eine Vorrichtung von der Art eines Übergabetisches umfasst, die dazu ausgelegt ist, Übergaben von Lasten von einem beliebigen von mindestens zwei horizontal benachbarten vorwärts laufenden Zuförderern (201, 202) zu dem einzigen Lagerplatz der Gondeln durchzuführen.

11. System nach einem der Ansprüche 1 bis 3, **dadurch gekennzeichnet, dass** jede Gondel (110) einen einzigen Lagerplatz umfasst und dass das System mindestens für eine gegebene Vorbereitungsstation mindestens eine Vorrichtung von der Art eines Übergabetisches (701) umfasst, die dazu ausgelegt ist, Übergaben von Lasten von dem einzigen Lagerplatz der Gondeln an einen von mindestens zwei vorwärtslaufenden Wegförderern (401, 402) durchzuführen, die horizontal benachbart sind und dazu ausgelegt sind, Lasten, die für die gegebene Vorbereitungsstation bestimmt sind, aus dem Paternoster auszuschleusen.

12. System nach einem der Ansprüche 1 bis 11, **dadurch gekennzeichnet, dass** die Steuerungseinheit (40) dazu ausgelegt ist, jede Last (30), die sich über einen rückwärts laufenden Zuförderer (501, 502) im Einlauf des Paternosters präsentiert, nachdem sie von der mindestens einen Vorbereitungsstation behandelt worden ist, nach einem der drei folgenden Modi zu behandeln:
(d) wenn die Last in einem ersten Zeitraum noch benötigt wird, um die mindestens eine Sequenz auszuführen, erfährt die Last nach dem Einschleusen in den Paternoster (100) mindestens eine Pufferübergabe zu einem gegebenen Pufferlagerplatz (600) und wird dann zu einem späteren Zeitpunkt wieder in den Paternoster (100) gesetzt und schließlich dem mindestens einen vorwärts laufenden Wegförderer (401, 402) präsentiert;
(e) wenn die Last in einem zweiten Zeitraum, der kürzer als der erste Zeitraum ist, noch benötigt wird, um die mindestens eine Sequenz auszuführen, wird die Last nach dem Einschleusen in den Paternoster (100) darin gehalten, bis sie dem mindestens einen vorwärts laufenden Wegförderer (401, 402) präsentiert wird;
(f) wenn die Last in einer dritten Zeit, die kürzer als die zweite Zeit ist, noch benötigt wird, um die mindestens eine Sequenz auszuführen, erfährt die Last nach dem Einschleusen in den Paternoster (100) eine abgekürzte Übergabe zwischen zwei einander gegenüber angeordneten Gondeln (110) und wird dann dem mindestens einen vorwärts laufenden Wegförderer (401, 402) präsentiert;
(g) wenn die Last nicht mehr benötigt ist, um die mindestens eine Sequenz auszuführen, wird die Last in den Paternoster (100) eingeschleust und dann zu einem rückwärts laufenden Wegförderer (301, 302) geleitet.

13. System nach Anspruch 12, **dadurch gekennzeichnet, dass** die Last (30) im Modus (g) nach dem Einschleusen in den Paternoster (100) eine abgekürzte Übergabe zwischen zwei einander gegenüber angeordneten Gondeln (110) erfährt.

14. System nach Anspruch 12, **dadurch gekennzeichnet, dass** die Last (30) im Modus (d) vor oder nach der mindestens einen Pufferübergabe eine abgekürzte Übergabe zwischen zwei einander gegenüber angeordneten Gondeln (110) erfährt.

15. Verfahren zum Sequenzieren von Lasten (30), die von mindestens einer externen Einheit über mindestens einen vorwärts laufenden Zuförderer (201, 202) kommen, und Liefern an mindestens eine Vorbereitungsstation (20) über mindestens einen vorwärts laufenden Wegförderer (401, 402) mindestens einer Sequenz, die Lasten (30) in einer gewünschten Reihenfolge umfasst, wobei das Verfahren in einem System ausgeführt wird, dass umfasst:
- einen gesteuerten Aufzug mit endlos umlaufenden Gondeln, Paternoster (100) genannt, wobei jede Gondel (110) es ermöglicht, mindestens eine Last zu transportieren, und mit einer Lastübergabevorrichtung an oder außerhalb der Gondel ausgestattet ist;
- mindestens einen Pufferlagerplatz (600), der dazu ausgelegt ist, mindestens eine vom Paternoster (100) kommende Last (30) vorübergehend aufzunehmen; und
- eine Steuerungseinheit (40);
**dadurch gekennzeichnet, dass** die Steuerungseinheit die Bewegungen der Lasten im System organisiert und jede Last (30), die sich im Einlauf des Paternosters (100) über den mindestens einen vorwärts laufenden Zuförderer (201, 202) präsentiert, gemäß einem der folgenden Modi behandelt, der in Abhängigkeit von der für die Last in der mindestens einen Sequenz gewünschten Position gewählt wird:
(a) nach dem Einschleusen in den Paternoster (100) erfährt die Last (30) eine abgekürzte Übergabe zwischen zwei einander gegenüber angeordneten Gondeln (110) durch Einsatz der Lastübergabevorrichtungen der beiden Gondeln und wird dann dem mindestens einen vorwärts laufenden Wegförderer (401, 402) präsentiert;
(b) nach dem Einschleusen in den Paternoster (100) erfährt die Last (30) mindestens eine Pufferübergabe an einen gegebenen Pufferlagerplatz (600), wird dann zu einem späteren Zeitpunkt wieder in den Paternoster (100) gesetzt und schließlich dem mindestens einen vorwärts laufenden Wegförderer (401, 402) präsentiert;
(c) nach dem Einschleusen in den Paternoster (100) wird die Last (30) darin ohne abgekürzte Übergabe oder Pufferübergabe transportiert und dann dem mindestens einen vorwärts laufenden Wegförderer (401, 402) präsentiert.

## Claims

1. A sequencing system for at least one preparation station (20), configured to sequence loads (30) originating from at least one external unit, via at least one incoming forward conveyor (201, 202), and to provide said at least one preparation station, via at least one outgoing forward conveyor (401, 402), with at least one sequence comprising loads in a desired order, **characterised in that** it comprises:
- a managed elevator with nacelles circulating in a closed loop, called a paternoster (100), each nacelle (110) allowing to transport at least one load (30) and being equipped with a load transfer device on or outside said nacelle;
- at least one buffer location (600), configured to temporarily receive at least one load (30) originating from the paternoster (100); and
- a control unit (40), configured to organise the movements of the loads in the system and to process each load (30) arriving at the entrance of the paternoster (100), via said at least one incoming forward conveyor (201, 202), according to one of the following modes, selected according to the desired place for said load in said at least one sequence:
(a) after introduction into the paternoster (100), the load (30) undergoes a bypass transfer between two nacelles (110) positioned facing each other, by implementing the load transfer devices of the two nacelles, then is presented to said at least one outgoing forward conveyor (401, 402);
(b) after introduction into the paternoster (100), the load (30) undergoes at least one buffer transfer to a given buffer location (600), then is subsequently placed back in the paternoster (100) and finally presented to said at least one outgoing forward conveyor (401, 402);
(c) after introduction into the paternoster (100), the load (30) is transported therein without bypass transfer or buffer transfer, then presented to said at least one outgoing forward conveyor (401, 402).

2. The system according to claim 1, **characterised in that**, in mode b), the load (30) undergoes, before or after the at least one buffer transfer, a bypass transfer between two nacelles (110) of the paternoster (100) positioned facing each other.

3. The system according to any one of claims 1 and 2, **characterised in that** said at least one sequence belongs to the group comprising:
- sequences each comprising only source loads, each source load being a container for storing product(s);
- sequences each comprising only target loads, each target load being a container for shipping product(s); and
- sequences each comprising a target load, which is a product shipping container, followed by at least one source load, which is a product storage container.

4. The system according to any one of claims 1 to 3, **characterised in that** each nacelle (110) comprises N locations (111, 112) which are horizontally adjacent and each having a rank comprised between 1 and N, with N greater than or equal to two, and **in that** the system comprises:
- at least N incoming forward conveyors (201, 202) each configured to perform load transfers to one of the N location rows, a distinct location row being associated with each incoming forward conveyor (201, 202); and
- for each preparation station, N outgoing forward conveyors (401, 402) which are horizontally adjacent and each configured to perform transfers of loads coming from one of the N location rows, a distinct location row being associated with each incoming forward conveyor (201, 202).

5. The system according to any one of claims 1 to 3, **characterised in that** each nacelle (110) comprises N locations (111, 112) which are horizontally adjacent and each having a rank comprised between 1 and N, with N greater than or equal to two, and **in that** the system comprises at least one transfer table type device (203, 204) configured to perform load transfers from said at least one incoming forward conveyor (201, 202) to any one of the N location rows.

6. The system according to claim 5, **characterised in that** said at least one transfer table type device (203, 204) is common to at least two horizontally adjacent incoming forward conveyors (201, 202) and is configured to perform load transfers from any one of the at least two incoming forward conveyors (201, 202) to any one of the N location rows.

7. The system according to any one of claims 1 to 3, **characterised in that** each nacelle (110) comprises N locations (111, 112) which are horizontally adjacent and each having a rank comprised between 1 and N, with N greater than or equal to two, and **in that** the system comprises, at least for a given preparation station, at least one transfer table type device (403, 404) configured to perform load transfers from any one of the N location rows to said at least one outgoing forward conveyor (401, 402) configured to evacuate from the paternoster (100) loads (30) intended for said given preparation station.

8. The system according to claim 7, **characterised in that** said at least one transfer table type device (403, 404) is common to at least two horizontally adjacent outgoing forward conveyors (401, 402) and is configured to perform load transfers from any one of the N location rows to any one of the at least two outgoing forward conveyors (401, 402).

9. The system according to any one of claims 1 to 3, **characterised in that** each nacelle (110) comprises N locations which are horizontally adjacent and each having a rank comprised between 1 and N, with N greater than or equal to two, and **in that** that the system comprises:
- N horizontally adjacent outgoing forward conveyors (400, 401, 402), each configured to receive loads (30) coming from one of the N location rows, a distinct location row being associated with each outgoing forward conveyor (400, 401, 402);
- a common conveyor (900), configured to receive loads coming from the N outgoing forward conveyors (400, 401, 402);
- N final forward conveyors (400', 401', 402'), each configured to receive loads coming from the common conveyor (900) and bring them to one of the N preparation stations; and **in that** the control unit (40) is configured to organise the movements of the loads in the system as follows:
- for each of the N nacelle location rows, sequencing loads according to a sequence from N sequences and providing the sequenced loads to the outgoing forward conveyor associated with said nacelle location row;
- transferring loads forming the N sequences from the N outgoing forward conveyors to the common conveyor;
- for each of the N sequences, transferring the loads forming said sequence from the common conveyor to one of the N final forward conveyors.

10. The system according to any one of claims 1 to 3, **characterised in that** each nacelle (110) comprises a single location, and **in that** the system comprises at least one transfer table type device configured to perform load transfers from any one of at least two horizontally adjacent incoming forward conveyors (201, 202) to the single location of said nacelles.

11. The system according to any one of claims 1 to 3, **characterised in that** each nacelle (110) comprises a single location, and **in that** the system comprises, at least for a given preparation station, at least one transfer table type device (701) configured to perform load transfers from the single location of said nacelles to any one of at least two horizontally adjacent outgoing forward conveyors (401, 402) and configured to evacuate from the paternoster loads intended for said given preparation station.

12. The system according to any one of claims 1 to 11, **characterised in that** the control unit (40) is configured to process according to one of the following modes each load (30) arriving, via an incoming backward conveyor (501, 502), at the entrance of the paternoster after having been processed by said at least one preparation station:
(d) if the load is still necessary, in a first period, to carry out said at least one sequence: after introduction into the paternoster (100), the load undergoes at least one buffer transfer to a given buffer location (600), then is subsequently placed back in the paternoster (100) and finally presented to said at least one outgoing forward conveyor (401, 402);
(e) if the load is still necessary, in a second period less than the first period, to carry out said at least one sequence: after introduction into the paternoster (100), the load is maintained therein until presented to said at least one outgoing forward conveyor (401, 402);
(f) if the load is still necessary, in a third period less than the second period, to carry out said at least one sequence: after introduction into the paternoster (100), the load undergoes a bypass transfer between two nacelles (110) positioned facing each other, then is presented to said at least one outgoing forward conveyor (401, 402);
(g) if the load is no longer necessary to carry out said at least one sequence, the load is introduced into the paternoster (100), then conveyed to an outgoing backward conveyor (301,302).

13. The system according to claim 12, **characterised in that**, in mode (g), the load (30) undergoes, after introduction into the paternoster (100), a bypass transfer between two nacelles (110) positioned facing each other.

14. The system according to claim 12, **characterised in that**, in mode (d), the load (30) undergoes, before or after the at least one buffer transfer, a bypass transfer between two nacelles (110) positioned facing each other.

15. A method for sequencing loads (30) originating from at least one external unit, via at least one incoming forward conveyor (201, 202), and providing at least one preparation station (20), via at least one outgoing forward conveyor (401, 402), with at least one sequence comprising loads (30) in a desired order, said method being implemented in a system comprising:
- a managed elevator with nacelles circulating in a closed loop, called paternoster (100), each nacelle (110) allowing to transport at least one load and being equipped with a load transfer device on or outside said nacelle;
- at least one buffer location (600), configured to temporarily receive at least one load (30) from the paternoster (100); and
- a control unit (40);
**characterised in that** the control unit organises the movements of the loads in the system and processes each load (30) arriving at the entrance of the paternoster (100), via said at least one incoming forward conveyor (201, 202), according to one of the following modes, selected according to the desired place for said load in said at least one sequence:
(a) after introduction into the paternoster (100), the load (30) undergoes a bypass transfer between two nacelles (110) positioned facing each other, by implementing load transfer devices from the two nacelles, then is presented to said at least one outgoing forward conveyor (401, 402);
(b) after introduction into the paternoster (100), the load (30) undergoes at least one buffer transfer to a given buffer location (600), then is subsequently placed back in the paternoster (100) and finally presented to said at least one outgoing forward conveyor (401, 402);
(c) after introduction into the paternoster (100), the load (30) is transported therein without bypass transfer or buffer transfer, then presented to said at least one outgoing forward conveyor (401, 402.
